# EUROPÄISCHE PATENTSCHRIFT

(11) **EP 2 860 546 B1**
(45) Veröffentlichungstag und Bekanntmachung des Hinweises auf die Patenterteilung: **07.08.2019**
(21) Anmeldenummer: 13187890.2
(22) Anmeldetag: 09.10.2013
(51) Int. Cl.: G01S 7/481, G02B 26/10, G02B 7/182

(54) **Vermessungsgerät mit einem Rotationsspiegel zum optischen Abtasten einer Umgebung**
Measuring device with a rotation mirror for optically scanning an environment
Appareil de mesure doté d'un miroir rotatif pour le balayage optique d'un environnement

(43) Veröffentlichungstag der Anmeldung: 15.04.2015
(73) Patentinhaber: Hexagon Technology Center GmbH, 9435 Heerbrugg (CH)
(72) Erfinder: Plangger, Karl Helmut, 6850 Dornbirn (AT); Mayer, Tim, 9326 Horn (CH); Scheja, Jochen, 6845 Hohenems (AT)
(74) Vertreter: Kaminski Harmann

(56) Entgegenhaltungen:
- EP-A1- 2 378 309
- EP-A1- 2 620 746
- EP-A2- 0 890 862
- DE-A1- 1 496 526
- DE-B3-102009 055 988
- US-B1- 6 386 719

## Beschreibung

Die Erfindung betrifft ein Vermessungsgerät, einen Laserscanner zum optischen Abtasten einer Umgebung, nach dem Oberbegriff des Anspruchs 1 und eine Rotationseinheit für ein solches Vermessungsgerät nach dem Oberbegriff des Anspruchs 1. Das Vermessungsgerät weist eine Rotationseinheit mit einem Rotationsspiegel, zum Umlenken eines Sendelichtstrahlstrahls und eines Empfangslichtstrahlstrahls, und einen zylinderförmig ausgebildeten Rotationskörper mit einem abgeschrägten, freien Ende auf.

Solche Vermessungsgeräte werden zur Erfassung von dreidimensionalen Objekten oder Oberflächen verwendet. Dabei tasten sie eine solche dreidimensionale Struktur, wie z.B. die eines Bauwerks, mit Laserpulsen sukzessive ab und berechnen dann aus den zurückerhaltenen Reflexionspulsen ein entsprechendes dreidimensionales Modell das die Oberfläche des Objekts beschreibt.

Als Laserscanner ausgebildete Vorrichtungen zum optischen Abtasten einer Umgebung umfassen üblicherweise einen auf einer Basis gelagerten Messkopf, der bezüglich dieser Basis um eine Basisdrehachse drehbar ist. Im Messkopf sind auf einer Seite Laserlichtquelle und Lichtsensor für den Empfang reflektierter Laserpulse untergebracht sowie eine Sende- und Empfangsoptik und eine Austrittsöffnung, die Aus- bzw. Eintritt der Strahlung aus bzw. in das Gehäuse erlaubt. Auf der anderen Seite des Messkopfes, der Austrittöffnung vis à vis, weist der Messkopf einen Rotationsspiegel zur Umlenkung von Sendelichtstrahl und Empfangslichtstrahl auf, der um eine auf der Basisachse senkrecht stehende Rotationsachse drehbar ist. Der Schnittpunkt der beiden Drehachsen entspricht in der Regel dem Auftreffpunkt des Sendelichtstrahlstrahls auf dem Rotationsspiegel, wobei der Rotationsspiegel im Allgemeinen um einen Winkel von 45° geneigt zu den Drehachsen angeordnet ist. Durch Drehung des Messkopfes um die Basisdrehachse und Rotation des Rotationsspiegels um die Rotationsachse, ist es möglich einen dreidimensionalen Scan durchzuführen.

Eine solche als Laserscanner ausgebildete Vorrichtung zum optischen Abtasten einer Umgebung ist beispielsweise aus der DE 10 2009 057 101 A1 bekannt. Auch diese Vorrichtung verfügt über einen Rotationsspiegel zur Umlenkung von Sendelichtstrahl und Empfangslichtstrahl, der in diesem Fall Teil einer als Hybridstruktur aufgebauten Rotationseinheit ist, d.h. eines mehrteiligen Gebildes aus unterschiedlichen Materialien, wobei die Rotationseinheit ausser dem Rotationsspiegel einen Halter aus Metall und ein Gehäuse aus Kunststoff aufweist. Der hinsichtlich der Masse dominierende Halter ermöglicht das Auswuchten, während das Gehäuse als Berührungsschutz dient. Der Halter hat eine zylindrische Grundform mit einer 45°-Fläche und verschiedenen Aussparungen mit Materialpartien, beispielsweise in der Form von Flügeln, Absätzen oder Vorsprüngen, zwischen den Aussparungen zum Auswuchten des Rotors. Der Rotationsspiegel ist durch Klebstoff auf der 45°-Fläche des Halters fixiert, wobei für den Klebstoff spezielle Befestigungsflächen innerhalb der 45°-Fläche vorgesehen sind. Das Gehäuse hat die Form eines unter 45° abgeschnittenen Hohlzylinders. Es umgibt wenigstens den Halter, kann aber gegebenenfalls auch den Rotationsspiegel am Rand übergreifen.

Ungünstig bei dieser Bauweise erscheint, dass die vorgegebene Struktur des Halters mit der vorgegebenen Auswuchtung durch die Materialpartien keine nachträgliche Feinkorrektur einer Unwucht erlaubt, wenn sich beispielsweise bei oder nach der Montage noch leichte Momentungleichgewichte und/oder Schwerpunktverlagerungen zeigen sollten. Die auf spezielle Art unregelmässig über die Stirnseite des Halters verteilten Klebepunkte zur Befestigung des Rotationsspiegels können sich bei einer schnellen Rotation durch die auftretenden Fliehkräfte negativ auf die Klebeverbindung, die Spannungszustände im Spiegel und die Ebenheit des Rotationsspiegels auswirken, was bis hin zu einem Ablösen des Spiegels vom Halter oder zum Zersplittern des Spiegels führen kann. Auch bei Temperaturschwankungen kann diese Art der Verklebung in Verbindung mit unterschiedlicher thermischer Dehnung zwischen Rotationsspiegel und Halter zu einem Erhöhten Risiko bezüglich Spannungen innerhalb des Rotationsspiegels führen. Wenn die Spannungen nicht zu gross werden und diese nicht zum Zersplittern oder Ablösen des Spiegels führen, so ist doch bei entsprechenden Spannungen zumindest die Ebenheit des Rotationsspiegels gefährdet, was sich negativ auf die Umlenkung des Sende- und Empfangslichtstrahls auswirkt und somit auf die Genauigkeit der Messung. Dynamische Wuchtung und Steifigkeit des Systems, die ebenfalls für die Messgenauigkeit eine große Rolle spielen, erscheinen in diesem Konzept ebenfalls unberücksichtigt.

Der gleiche Rotationskörper ist auch in der DE10 2009 055 988 offenbart, mit den entsprechend gleichen Eigenschaften.

EP 2 860 546 zeigt unter anderem eine Rotationseinheit für ein Vermessungsgerät mit Scanfunktionalität, wobei die Rotationseinheit einen abgeschrägten Hohlzylinder als Rotationskörper aufweist, auf dessen freien, abgeschrägten Ende ein Rotationsspiegel angeordnet ist, wobei der Hohlzylinder um seine Zylinderachse rotierbar gelagert ist. Einzelheiten, wie der Rotationsspiegel an dem abgeschrägten Ende des Hohlzylinders befestigt ist, werden allerdings nicht beschrieben.

In US 6,386,719 wird darauf eingegangen, dass es in optischen Geräten generell sehr wichtig ist, dass Spiegel korrekt positioniert sind. Für eine solche korrekte Positionierung wird vorgeschlagen den Spiegel mittels Federelementen und Justierschrauben zu positionieren, wobei die Federelemente den Spiegel gegen eine entsprechendes Wiederlager oder gegen ein gegenüberliegendes weiteres Federelement drücken, wodurch der Spiegel entsprechenden Druckkräften ausgesetzt ist.

DE 1496526 befasst sich generell damit, wie Spiegel splitterfrei hergestellt werden können, wobei ein zersplittern des Spiegels im Ernstfall primär über das Aufbringen von entsprechenden Sicherheits-Folien erreicht wird.

Aufgabe der vorliegenden Erfindung ist die Bereitstellung eines Vermessungsgeräts zum optischen Abtasten einer Umgebung mit einem Rotationsspiegel als Teil einer Rotationseinheit und die Bereitstellung einer solchen Rotationseinheit mit Rotationsspiegel, mit der zumindest einzelne der im Stand der Technik beschriebenen Nachteile überwunden werden.

Aufgabe der Erfindung ist insbesondere, eine Rotationseinheit für ein gattungsgemässes Vermessungsgerät bereitzustellen, die leicht ist und bei der Spannungen im Spiegel besser vermieden werden können.

Aufgabe der Erfindung ist es insbesondere auch, eine solche Rotationseinheit bereitzustellen, bei der die Ebenheit des Spiegels nicht durch wechselnde Temperaturen und/oder schnelle Drehbewegungen beeinträchtigt wird.

Wenigstens eine dieser Aufgaben wird durch ein Vermessungsgerät bzw. eine Rotationseinheit gemäß den jeweiligen unabhängigen Ansprüchen bzw. durch eine Rotationseinheit gemäß dem unabhängigen Anspruch 1 und einem oder mehreren der abhängigen Ansprüche gelöst.

Eine solche Rotationseinheit für ein Vermessungsgerät, das als Laserscanner zum optischen Abtasten einer Umgebung ausgebildet ist, ist eine Rotationseinheit mit einem zylinderförmig ausgebildeten Rotationskörper mit einer Zylinderachse und einem abgeschrägten freien Ende, in dessen Bereich, geneigt gegenüber der Zylinderachse ein Rotationsspiegel zum Umlenken eines Sendelichtstrahls und eines Empfangslichtstrahlstrahls vorgesehen ist. Erfindungsgemäss ist der Rotationskörper als ein Hohlzylinder mit einem Hohlraum ausgebildet, wobei der Hohlraum quer zur Achsrichtung durch einen Zylinderboden und radial durch eine im Wesentlichen axial vom Zylinderboden abstehende Zylinderwand begrenzt wird. Des Weiteren wird der Hohlraum auf der dem Zylinderboden gegenüberliegenden Seite durch den Rotationsspiegel begrenzt, der im Bereich des abgeschrägten, freien Endes der Zylinderwand an dieser befestigt ist. Der Hohlzylinder ist seinerseits bezüglich seiner Zylinderachse koaxial mit einer motorgetriebenen Welle drehfest verbunden, vorzugsweise über seinen Zylinderboden. Der Rotationsspiegel ist somit an dem Bauteil befestigt, das auch drehfest mit der angetriebenen Welle verbunden ist. Die erfindungsgemässe Rotationseinheit weist also keinen eigentlichen Spiegelhalter auf und kein eigentliches Gehäuse. Das erleichtert die Montage und verkürzt die Montagezeit. Die Abmessungen können sehr kompakt gehalten werden, so dass die Rotationseinheit sehr steif und platzsparend und auf Grund des als Hohlzylinders ausgebildeten Rotationskörpers auch sehr leicht ist.

In einer Ausführungsform ist der Rotationsspiegel in seinem peripheren Bereich entlang seines Umfangs an der Zylinderwand des Hohlzylinders befestigt. Auf diese Weise können thermische und mechanische Spannungen vermieden werden, die üblicherweise auftreten bei einer Verklebung des Spiegels stirnflächig auf dem abgeschrägten Zylinder mit Klebepunkten auf der gesamten Rückseite der Spiegelfläche. und die sich negativ auf die Ebenheit des Spiegels auswirken.

Die Rotationseinheit ist, wie ausgeführt mit einer angetriebenen Welle fest verbunden. Die Welle ist über einen Motor angetrieben, der in einem Motorengehäuse gelagert ist, welches wiederum im Vermessungsgerät gelagert ist. Eine der Rotationseinheit zugewandte Gehäusewand des Motorengehäuses weist eine Austrittsöffnung für den Durchtritt der Welle auf. An dieser Gehäusewand ist vorzugsweise auch ein Winkelencoder angeordnet, mit dessen Hilfe die genaue Winkelstellung der Rotationseinheit und somit diejenige des Rotationsspiegels bestimmt werden kann. Auf diese Weise kann auch die Richtung von Sende- bzw. Empfangslichtstrahl bestimmt werden. Eine Encoderscheibe des Winkelencoders ist dabei vorzugsweise am Zylinderboden der Rotationseinheit angeordnet, während ein Sensor des Winkelencoders an jener der Rotationseinheit zugewandten Seite des Motorengehäuses angeordnet ist. Der Zylinderboden kann dabei vorzugsweise leicht in den Hohlzylinder hinein versetzt sein, so dass die Zylinderwand den Zylinderboden in Richtung auf das Motorengehäuse überragt. Auf diese Weise kann die Zylinderwand des als Hohlzylinder ausgebildeten Rotationskörpers die Encoderscheibe aussen umgreifen und schützen. Außerdem entsteht auf diese Weise ein passend großer Spalt für den Winkelencoder zwischen Rotationskörper und Motorengehäuse, ohne dass die baulichen Abmessungen des Rotationskörpers, des Motorengehäuses und somit des Vermessungsgerätes bzw. des Laserscanners insgesamt geändert werden müssten. Diese Bauweise spart also Bauraum und reduziert die Montagekosten, da Bauteile wie Kreisscheibenträger und Sensorträger eingespart werden können. Ausserdem ermöglicht dies die Verwendung von zylindrischen Sensoren. Auch ist auf diese Weise sowohl der Einsatz von optischen als auch von kapazitiven Sensoren möglich. Ein weiterer Vorteil ist, dass auf diese Weise die Verbiegung der Welle mittels des Winkelencoders messbar ist als axialer und radialer Versatz, was wiederum genutzt werden kann für eine genauere Auswertung der Messergebnisse.

Eine andere Möglichkeit den Winkelencoder, der die Rotation des Rotationskörpers erfasst, zu platzieren, besteht darin die Encoderscheibe des Winkelencoders auf der Rückseite, also auf jener der Rotationseinheit gegenüberliegenden Seite des Motorengehäuses zu platzieren. Dies ist besonders dann vorteilhaft, wenn die Welle auf beiden Seiten des Motorengehäuses gelagert ist und zwar mit einem Fest-Los-Lager Konzept, wobei sie in der Regel auf der dem Rotationskörper entgegengesetzten Seite des Motorengehäuses mit radialem Spiel (Los-Lager) oder geringer Lagersteifigkeit gelagert ist. In einer solchen Situation kann der Winkelencoder vorteilhaft auch dazu genutzt werden die Bewegung der Welle im Lagerspiel zu messen.

Ist der Winkelencoder hingegen auf der Fest-Lager Seite des Los-Fest-Lagers angeordnet, so ist natürlich die Abstützung des Winkelencoders stabiler.

Der als Hohlzylinder ausgebildete Rotationskörper ist mit Vorteil aus einem leichten Material gefertigt, wie beispielsweise aus Aluminium, einer Aluminiumlegierung, Magnesium, Magnesiumlegierung oder Kunststoff. Er ist vorzugsweise mit seinem Zylinderboden einstückig ausgebildet, was die Fertigung vereinfacht und die verkettet wirkenden Toleranzen reduziert.

In speziellen Ausführungsformen können Hohlzylinder und Zylinderboden als zwei separate Bauteile gefertigt sein. Dies ist insbesondere Vorteilhaft, wenn der Zylinderboden zugleich als Auswuchtelement dient und dann aus einem Material mit höherem spezifischen Gewicht gefertigt ist als der Hohlzylinder, nämlich beispielsweise aus einer Messinglegierung.

In einer weiteren speziellen Ausführungsform dient die Welle als Zylinderboden und der Hohlzylinder ist entweder durch einen Presssitz, eine Verklebung oder eine lösbare Verbindung, wie beispielsweise eine Verschraubung, direkt mit der Welle verbunden.

Die Ausgestaltung des Rotationskörpers als Hohlzylinder und die Befestigung des Rotationsspiegels in Randbereichen entlang seines Umfangs, ohne zentrische oder über eine grössere Fläche verteilte Befestigungspunkte inmitten der Spiegelfläche, vermindert stark das Risiko von auf den Spiegel einwirkenden Scherkräften und daraus resultierenden Spannungen innerhalb des Spiegels und mit entsprechend daraus resultierenden negativen Auswirkungen auf die Ebenheit des Spiegels. Auch werden potentiell auftretende Spannungsrisiken, aufgrund unterschiedlicher thermischer Ausdehnungskoeffizienten des Spiegels (insbesondere aus Glas) und des tragenden Rotationskörpers (insbesondere aus Aluminium oder Kunststoff), vermieden. Da im Gegensatz zum Stand der Technik der Innenbereich des Rotationsspiegels nicht verklebt ist, ist dieser Bereich frei von lokal ausgeprägten Schubspannungen sowie Biegespannungen zwischen den Klebepunkten und lokalen Spannungsspitzen an den Klebepunkten, was besonders bezüglich der dort erfolgenden Umlenkung des Sendelichtstrahls vorteilhaft ist. Durch die Verklebung am Rand werden die üblicherweise durch thermische Deformation sich ausbildende Normalspannungen abgeleitet bzw. aufgefangen. Außerdem wird das Risiko von Winkelfehlern bzw. Passfehlern, welche zu einer Abweichung von der idealen Spiegelform und Spiegelposition führen können, vermieden. Folglich wird auch ein Einfluss von spiegelinternen Spannungen auf Ebenheit und Reflexionsrichtung vermieden. Das Risiko eines Zerbrechens oder Ablösens des Spiegels bei hohen Drehzahlen - oft nach Vorschädigung durch thermische Spannungen - wird durch seine nur periphere Befestigung vermindert.

Aufgrund des gewählten leichten Materials für den Rotationskörper und durch die Ausführung als Hohlkörper kann der Rotationskörper sehr kompakt gestaltet werden, was zu einem idealen Verhältnis von Masse und Steifigkeit führt. Diese Steifigkeit der den Rotationsspiegel unterstützenden Struktur wirkt sich wiederum positiv bezüglich der Spannungen, insbesondere Biegespannungen im Spiegel und in der Verbindung zwischen Spiegel und Rotationskörper aus, wodurch die Ebenheit der Spiegeloberfläche und Winkelstabilität auch bei hohen Drehzahlen gewährleistet beleiben.

Gemäss einer Ausführungsform ist der Rotationsspiegel stirnseitig an der Zylinderwand befestigt. Insbesondere entspricht dann der Neigungswinkel des Rotationsspiegels dem Neigungswinkel des abgeschrägten, freien Endes des Zylinderwand gegenüber der Zylinderachse, wobei dieser vorzugsweise 45° beträgt. Weist die Stirnfläche der Zylinderwand ebenfalls diesen Neigungswinkel auf kann der Rotationsspiegel einfach eben auf die Stirnfläche aufgelegt und befestigt werden.

Gemäss einer anderen Ausführungsform ist der Rotationsspiegel radial innen im Bereich des freien Endes der Zylinderwand befestigt. Wobei auch hier der Neigungswinkel des Rotationsspiegels vorzugsweise dem Neigungswinkel des abgeschrägten, freien Endes des Zylinderwand entspricht, der vorzugsweise 45° beträgt.

Beide Ausführungsformen erleichtern eine passgerechte Positionierung des Rotationsspiegels, im Vergleich zu mittigen Befestigungen.

Ist der Rotationsspiegel radial innen im Bereich des freien Endes der Zylinderwand befestigt, so kann die Zylinderwand vorteilhafterweise benachbart zum freien Ende, radial innen ein Schulterelement aufweisen, gegen welches der Rotationsspiegel in seinem peripheren Bereich entlang seines Umfangs abstützbar ist. Unter "benachbart zu dem freien Ende" wird dabei verstanden, dass das Schulterelement vom freien Ende der Zylinderwand um eine Distanz in den Hohlraum hinein zurückversetzt angeordnet ist, welche der einfachen bis dreifachen Dicke des Rotationsspiegels entspricht, bevorzugt der einfachen Dicke. Das Schulterelement hat vorteilhafterweise einen Neigungswinkel gegenüber der Zylinderachse, der dem gewünschten Neigungswinkel des Rotationsspiegels entspricht, nämlich vorzugsweise 45°. Dabei kann das Schulterelement als durchgehender Kragen oder in Form eines durchbrochenen Kragens bzw. einer Vielzahl einzelner Stützelemente radial nach innen von der Zylinderwand abstehen. Durch das Schulterelement wird eine Ausrichtung des Rotationsspiegels bei dessen Montage in die Rotationseinheit erleichtert.

Erfindungsgemäß ist der Rotationsspiegel im Bereich des freien Endes der Zylinderwand durch eine Klebeverbindung befestigt. Denkbar ist aber auch die Befestigung mittels eines Befestigungsringes, mittels Befestigungsklemmen, Federelementen, wie sie weiter unten genauer beschrieben werden, oder ähnlichem.

Abhängig von den Eigenschaften eines verwendeten Klebstoffs können Steifigkeit bzw. Elastizität der Klebeverbindung zwischen dem Rotationsspiegel und dem entsprechenden Bereich des Hohlzylinders bzw. seiner Zylinderwand gezielt eingestellt werden. Zugleich kann ein zur Verbindung eingesetzter Klebstoff vorteilhaft bezüglich unterschiedlicher temperaturbedingter Materialausdehnungen ausgleichend zwischen Zylinderwand und Rotationsspiegel wirken.

Die Art der Verklebung, wie beispielsweise eine durchgängige Verklebung oder mehrere Klebestellen, kann ebenso optimiert gewählt werden wie die Anzahl und Anordnung von Klebestellen sowie die Größe und Dicke der einzelnen Klebestellen. Die Optimierung kann insbesondere auch im Hinblick auf die Wanddicke der Zylinderwand und die Dimensionen und Eigenschaften des Rotationsspiegels erfolgen.

Gemäss einer weiteren bevorzugten Ausführungsform ist der Rotationsspiegel am freien Ende der Zylinderwand durch Verklebung mittels mehrerer verschiedener Klebstoffe mit unterschiedlichen Eigenschaften befestigt. Dadurch können insbesondere bei schneller Rotation auf den Spiegel einwirkende Kräfte gegebenenfalls unterschiedlicher Richtung und Stärke vorteilhaft kompensiert oder zumindest vermindert werden, insbesondere wenn die verschiedenen Klebstoffe entsprechend der Kräfte entlang des Umfangs verteilt über den zu verklebenden peripheren Bereich des Rotationsspiegels eingesetzt werden. Dies kann insbesondere eine spiegel- und/oder punktsymmetrische Verteilung beinhalten.

Aufgrund seiner Formgebung als abgeschrägter Hohlzylinder weist der Hohlzylinder im Bereich seines freien Endes im Bereich einer ersten Hälfte typischerweise eine Zylinderwand kürzerer Länge auf und im Bereich einer zweiten, der ersten Hälfte gegenüberliegenden Hälfte eine Zylinderwand grösserer Länge auf. Es ist nun vorteilhaft, wenn der Rotationsspiegel im Bereich der ersten kürzeren Hälfte mittels einer ersten Klebeverbindung, welche gegenüber einer zweiten Klebeverbindung härter ist, an der Zylinderwand befestigt ist und im Bereich der zweiten längeren Hälfte mittels einer zweiten Klebeverbindung, welche elastischer ist als die erste Klebeverbindung. Die Härte bzw. die Elastizität der Klebeverbindung kann dabei durch die Wahl eines entsprechenden Klebstoffs, z.B. eines ersten härteren Klebstoffs und eines zweiten elastischeren Klebstoffs, und/oder durch die geeignete Wahl der Klebespaltdicke bestimmt werden.

Dabei werden typischerweise Klebstoffe mit Härten zwischen 15 Shore A und 80 Shore D eingesetzt. Die individuelle Paarung der verwendeten Klebstoffe richtet sich jeweils nach den Materialeigenschaften des verwendeten Hohlzylinders und des verwendeten Spiegels, insbesondere auch nach deren Wärmeausdehnungskoeffizienten und nach den voraussichtlichen Umgebungsbedingungen am Einsatzort, nämlich voraussichtlicher Temperaturbereich in dem das Gerät eingesetzt werden soll, Feuchtigkeit, Luftdruck etc. Als besonders geeignet haben sich Klebstoffe auf Epoxidharzbasis erwiesen.

Insbesondere bei hohen Drehzahlen wirkt auf den Rotationsspiegel im Bereich der kürzeren Hälfte der unterstützenden Zylinderwand eine Fliehkraft mit der Tendenz zu einer Ablösung des Spiegels von seiner tragenden Zylinderwand und auf der längeren Hälfte eine auf die Zylinderwand zu gerichtete Kraft mit einer Tendenz einer Anpressung des Rotationsspiegels. Ein relativ harter Klebstoff im Bereich der kürzeren Hälfte bewirkt eine steife Anbindung des Spiegels an die Zylinderwand und verhindert so eine Verformung der Klebeverbindung durch die einwirkenden Fliehkräfte. Das Risiko einer Ablösung des Rotationsspiegels wird so vermindert. Ein relativ elastischer Klebstoff im Bereich der längeren Hälfte kompensiert unterschiedliche thermische Ausdehnungen von Zylinderwand und Rotationsspiegel, wodurch, im Zusammenwirken der auf entgegengesetzten Hälften angebrachten Klebstoffe mit unterschiedlichen Eigenschaften, das Risiko von Spannungen im Rotationsspiegel weiter vermindert wird.

So kann die Klebeverbindung zwischen Rotationsspiegel und Zylinderwand beispielsweise in der ersten kürzeren Hälfte der Zylinderwand durch einen Epoxy-Klebstoff mit einer Härte von 80 Shore D - (was etwa einem E-Module 3000N/mm2 entspricht, zieht man die für Kunststoffe angenommene nicht eindeutige Beziehung zwischen Shore-Härte und E-Modul analog für Klebstoffe heran) und in der zweiten längeren Hälfte der Zylinderwand durch einen Epoxy-Klebstoff mit einer Härte von 50 Shore A realisiert sein.

Gemäss einer weiteren bevorzugten Ausführungsform ist die Klebeverbindung zwischen Rotationsspiegel und Zylinderwand durch diskrete Klebestellen verwirklicht. Durch eine Verklebung des Spiegels nur in diskreten peripheren Bereichen kann das Risiko von Spannungen im Spiegel auch im peripheren Bereich vermindert werden. Dabei wird des Weiteren bevorzugt, dass die diskreten Klebestellen spiegel- und/oder punktsymmetrisch auf die längere Hälfte und die kürzere Hälfte verteilt sind.

Die diskreten Klebestellen können eine beliebige geometrische Form aufweisen, beispielsweise kreisförmig oder punktförmig oder lamellenartig ausgebildet sein.

Gemäss einer weiteren Ausführungsform weist die Zylinderwand radial innen oder stirnseitig im Bereich ihres freien Endes eine Klebenut oder einzelne Vertiefungen, zur Aufnahme von Klebstoff für die Verklebung des Rotationsspiegels auf.

Dabei ist die Ausführungsgeometrie des Klebespalts, wie beispielsweise seine Tiefe und Breite, optimiert angepasst insbesondere an die Dicke der Zylinderwand und die Dimensionen des Rotationsspiegels.

Um den ablösenden Tendenzen durch die auftretenden Fliehkräfte noch besser entgegen wirken zu können, kann in der Hälfte der kürzeren Zylinderwand, in ihrem kürzesten Bereich die Zylinderwand mit einem in den Hohlraum des Holzylinders hineinragenden Flansch versehen sein, auf dem radial von der Zylindermitte beabstandet eine oder mehrere zusätzliche Klebestellen vorgesehen sein können. Der Flansch ist symmetrisch in Bezug auf die Mitte der kürzeren Hälfte gestaltet und erstreckt sich vom Rand maximal einen halben Innenradius des Zylinders in den Hohlraum hinein. Er kann sowohl für Varianten vorgesehen sein, bei denen der Rotationsspiegel stirnseitig auf die Zylinderwand aufgeklebt ist, als auch bei Varianten, bei denen der Rotationsspiegel im freien Ende des Hohlzylinders radial innen an der Zylinderwand oder and einer in den Hohlraum hineinragenden Schulter der Zylinderwand verklebt ist. Entsprechend ist der Flansch bündig mit der Stirnseite der Zylinderwand oder vom freien Ende der Zylinderwand in den Hohlraum hinein zurückversetzt angeordnet.

Vorteilhaft ist der Flansch einstückig mit dem Holzylinder gestaltet, insbesondere wenn der Holzylinder als Gussteil geformt ist.

Gemäss einer Ausführungsform ist der Rotationsspiegel aus spiegelnd beschichtetem Glas gefertigt, wobei er bevorzugt eine Dicke von 0.5 mm bis 3 mm, insbesondere von 1 mm bis 2 mm, aufweist. Vorzugsweise sind seine Geometrie und Härte auf das System und die zu erwartenden Kräfte angepasst, und allenfalls auch seine chemische Beständigkeit gegenüber Bestandteilen des vorgesehenen Klebstoffes.

Gemäss einer weiteren Ausführungsform ist der Rotationsspiegel mit einer Bruchsicherung versehen, die insbesondere in Form einer in das Glas des Spiegels integrierten oder auf seine Rückseite aufgebrachten Sicherheitsfolie oder Beschichtung oder in Form eines auf der Rückseite des Rotationsspiegels angebrachten Metallblechs mit geringem thermischen Ausdehnungskoeffizienten ausgestaltet sein kann. Als Beschichtung oder Sicherheitsfolie kommen beispielsweise solche in Frage, wie sie aus der Automobilindustrie für die Sicherung von Windschutzscheiben bekannt sind; für das Metallblech kommt beispielsweise ein Stahlblech mit einem thermischen Ausdehnungskoeffizienten von 5ppm/K bis 15ppm/K in Frage. Durch diese Bruchsicherung kann beispielsweise im Falle einer Beschädigung oder eines Zerspringens des Rotationsspiegels eine Verbreitung herumfliegender Splitter verhindert werden.

Alternativ oder ergänzend kann eine Sicherheitsvorkehrung vorgesehen sein, die bei Versagen der Befestigung den Rotationsspiegel im Bereich des Hohlzylinders zurückhält. Diese Sicherheitsvorkehrung umfasst beispielsweise ein Sicherheitselement, das die Zylinderwand entlang ihres Umfangs, an deren freien Ende, radial aussen und den Rotationsspiegel stirnseitig, vorzugsweise formschlüssig umgreift. Das Sicherheitselement kann dabei durchgehend oder unterbrochen oder in Form von entlang des Umfangs, vorzugsweise gleichmässig verteilter Einzelelemente ausgebildet sein. Eine solche Sicherheitsvorkehrung ist insbesondere geeignet, ein Abfliegen des Rotationsspiegels bei schneller Rotation zu verhindern.

Aufgrund der erfindungsgemäss steifen Ausgestaltung des Hohlzylinders (Materialwahl, Wandstärke, kurze frei Länge der Zylinderwand) und der steifen Anbindung des Spiegels an den steifen Rotationskörper, kann die Spiegeldicke gering gehalten werden, ohne dass es zu Spiegeldeformationen kommt. Dies ist wichtig, da der Spiegel für genaue Messungen möglichst plan sein muss (µ-Bereich) und auch nicht verkippen oder verrutschen darf. Durch die geringe Spiegeldicke kann vorteilhaft das Gewicht des Spiegels niedrig gehalten werden. Da auch der Rotationskörper aufgrund seiner Ausgestaltung als Hohlzylinder und aufgrund seines leichten Materials nur eine geringe Masse aufweist, können Wellenbiegungen und daraus resultierende Messfehler minimiert werden. Ausserdem kann hierdurch der Energieverbrauch zum Betrieb der Rotationseinheit niedrig gelten werden. Zudem ermöglicht dies eine weitere Steigerung der kompakten Bauweise bei vermindertem Gewicht des erfindungsgemässen Vermessungsgeräts.

Gemäss einer Ausführungsform ist die Rotationseinheit mit mindestens einem Auswuchtelement versehen, das im Hohlraum und dort insbesondere im Bereich des Zylinderbodens angeordnet ist. Dieses Auswuchtelement umfasst vorteilhaft Material, das schwerer ist als dasjenige aus dem der Hohlzylinder gefertigt ist, d.h. ein Material mit einem grösseren spezifischen Gewicht als das Material des Hohlzylinders, wie beispielsweise Messing. Dadurch werden eine statische und eine dynamische Auswuchtung der Rotationseinheit ermöglicht, was eine Belastung der Welle durch Unwucht verhindert. Außerdem können auf diese Weise durch die Unwucht verursachte Wellenbiegungen minimiert werden und durch die Unwucht angeregte Vibrationen vermieden werden. Eine solche Auswuchtung, unter Einsatz gegeneinander austauschbarer Auswuchtelemente unterschiedlicher Masse und/oder Geometrie, erfolgt typischerweise beim Hersteller der Rotationseinheit. Durch Verwendung unterschiedlicher Materialien für die verschiedenen Komponenten der Rotationseinheit, beispielsweise Kunststoff als ein leichteres Material für Zylinderwand und Zylinderboden des Rotationskörpers und Messing als ein schwereres Material für Auswuchtelemente, kann vorteilhaft die Länge der Rotationseinheit mit dem Rotationsspiegel vergleichsweise kurz gestaltet werden.

Gemäss einer weiteren Ausführungsform können als Auswuchtelement entlang der Zylinderachse auch ein oder mehrere Auswuchtkreise vorgesehen sein. Ein Auswuchtkreis umfasst mehrere konzentrisch und gleichmässig um die Zylinderachse angeordnete Öffnungen oder Gewindebohrungen, in die nach Bedarf verschieden grosse Madenschrauben eingeschraubt, Massestifte oder Knetmasse eingefügt werden können. Gemäß einer bevorzugten Ausführungsform ist ein Auswuchtkreis in der Zylinderwand des Hohlzylinders vorgesehen und zwar vorzugsweise auf seiner dem freien Ende mit dem Rotationsspiegel gegenüberliegenden Seite. Die Bohrungen können dabei in die Stirnseite der Zylinderwand eingebracht sein - also sozusagen zwischen der Rotationseinheit und dem Winkelencoder - und sich dann vorzugsweise axial erstrecken oder sie können entlang des inneren oder äusseren Umfanges angeordnet sein und sich dann vorzugsweise radial erstrecken. Sind die Gewindebohrungen entlang des äusseren Umfanges angeordnet, können sie natürlich auch an einem beliebeigen anderen Ort entlang der axialen Erstreckung der Zylinderwand angeordnet sein; vorzugsweise natürlich an solchen Orten entlang der axialen Erstreckung, an dem die Zylinderwand einen vollen Umfang zeigt. Ein anderer möglicher Ort für einen Auswuchtkreis ist die Aussenseite des Zylinderbodens, die dem Motorengehäuse zugewandt ist. Noch eine weitere Möglichkeit einen Auswuchtreis anzuordnen, besteht entlang des Umfangs der Welle. Dies kann besonders dann vorteilhaft genutzt werden, wenn die Welle durch den Motor hindurch geführt ist. Wird der Auswuchtkreis dann auf dem der Rotationseinheit gegenüberliegenden Ende ausserhalb des Motors angeordnet kann aufgrund des langen Hebels mit Wuchtelementen kleiner Masse bereits eine große Wirkung erzielt werden. Besonders vorteilhaft an den Auswuchtkreisen ist, dass sie eine insbesondere auch nachträgliche Feinauswuchtung nach der Montage ermöglichen. Dies gilt für alle beschriebenen Auswuchtkreise, aber wegen ihrer besonders guten Zugänglichkeit natürlich besonders für die Auswuchtkreise entlang des äusseren Umfanges des Hohlzylinders.

Noch eine andere, wenngleich auch etwas aufwändigere Feinauswuchtung besteht darin, dass man statt Masseelemente zum Auswuchten hinzuzufügen, Material von der Zylinderwand oder dem Zylinderboden des Hohlzylinders wegnimmt. Dies kann am einfachsten durch das Anbringen von Senklöchern erfolgen, wobei der Materialabtrag durch eine Senkloch und die Platzierung des Senklochs zuvor genau berechnet werden.

Selbstverständlich wird bei der Platzierung von Senklöchern (Kerbwirkung) wie auch bei dem hinzufügen von Masseelementen darauf geachtet, dass durch den Materialabtrag bzw. die Massehinzufügung die statische und dynamische Stabilität des Bauteils immer gewährleistet bleiben.

Typischerweise ist zwischen dem Rotationsspiegel und dem freien Ende der Zylinderwand ein Spalt vorhanden. Bevorzugt ist dieser Spalt mit einer Spaltabdichtung versehen. Dadurch kann ein Eindringen von Staub und/oder Schmutz und/oder Feuchtigkeit verhindert werden. Die Spaltabdichtung kann beispielsweise ein abdichtendes Klebeband und/oder einen Lack und/oder ein Bauteil umfassen, das insbesondere randumschliessend ausgestaltet ist, also sowohl einen Rand der Zylinderwand als auch eine peripheren Bereich des Rotationsspiegel umfasst. Insbesondere kann dieses randumfassende Bauteil zugleich als Sicherungsvorkehrung dienen, wenn es stabil genug ausgeführt, mit einer entsprechenden Dichtung versehen und sicher an der Zylinderwand befestigbar ist.

Typischerweise, um eine reibungsfreie Rotation der Rotationseinheit gegenüber einem Motorgehäuse zur Aufnahme eines Motors für den Antrieb der Welle zu ermöglichen, ist zwischen dem Zylinderboden und dem Motorgehäuse ein zweiter Spalt vorhanden, für den keine Spaltabdeckung vorgesehen ist. Um einen Luftaustausch zwischen dem Hohlraum und der Umgebung zu ermöglichen, ist, gemäss einer weiteren Ausführungsform, im Zylinderboden oder seitlich eine Durchlassöffnung vorgesehen. Die Durchlassöffnung ist mit einer luftdurchlässigen Membran versehen, die aber für Staub und Feuchtigkeit undurchlässig ist. Dadurch ist eine kontinuierliche Anpassung des Luftdrucks im Hohlraum an den Luftdruck der Umgebung ermöglicht, was im Fall von Luftdruckschwankungen und bei hohen Rotationsgeschwindigkeiten wichtig ist, damit sich der Rotationsspiegel nicht wölbt. Ist es aus baulichen Gründen nicht möglich oder erwünscht den Zylinderboden mit einer solchen, membranversehenen Durchgangsöffnung für den Druckausgleich vorzusehen, kann statt der Spaltabdichtung auch ein Membranverschluss des Spalts zwischen Zylinderwand und Rotationsspiegel vorgesehen sein. Die Membran ist analog der Spaltabdichtung angebracht, lässt aber im Gegensatz zur Spaltabdichtung Luft durch den Spalt strömen, währen Staub, Feuchtigkeit und Schmutz von der Membran zurückgehalten und nicht in den Hohlraum gelassen werden.

Statt den Rotationsspiegel direkt, mit der Zylinderwand zu verbinden und diesen beispielsweise mit der Zylinderwand zu verkleben, ist es beispielsweise auch möglich den Rotationsspiegel mittels eines oder mehrerer Federelemente mit der Zylinderwand zu verbinden. Bei entsprechend steif gewählten Federelementen können durch die Federelemente Spannungen/Scherkräfte aufgrund unterschiedlicher thermischer Ausdehnungskoeffizienten des Rotationsspiegels und der Zylinderwand oder aufgrund der bei hohen Drehzahlen wirkenden Kräfte aufgenommen werden, ohne dass der passgenaue Sitzt des Rotationsspiegels in der Rotationseinheit darunter leidet. Spannungen und Scherkräfte im Rotationsspiegel, die seine Ebenheit beeinträchtigen könnten, können so über das oder die Federelemente effizient abgeführt.

In einer ersten Ausbildungsform sind das oder die Federelemente als Spiralfeder(n) ausgestaltet. Die Spiralfeder(n) ist/sind fest mit der Zylinderwand verbunden, vorzugsweise im Bereich des freien Endes des Holzylinders, so dass sie sich von der Zylinderwand in den Hohlraum des Zylinders und gegen den Rotationsspiegel erstreckt/erstrecken. Sie ist/sind mittels Klebeverbindung, Klemmverbindung oder mittels Verbindungsstift in oder an der Zylinderwand fixiert.

In einer bevorzugten Ausführungsform sind mehrere Federelemente in Form von Federblechzungen ausgebildet. Diese sind mittels Klebeverbindung, Schraubverbindung, Nietung, Verschweissung oder mittels Klemmverbindung in oder an der Zylinderwand fixiert und erstrecken sich vom Umfang her von der Zylinderwand nach innen und gegen den Rotationsspiegel. Mit ihren freien Enden sind sie mit dem Rotationsspiegel fest verbunden.

In noch einer anderen Ausführungsform ist nur ein Federelement vorgesehen, das als ein ringförmiges Federblech ausgebildet ist und das nach radial aussen abstehende Verbindungselemente aufweist, welche zum Beispiel unter leichter Vorspannung in oder an der Zylinderwand fixiert sind. Der Ring des ringartigen Federblechs ist in seiner Geometrie der ellipsoiden Öffnung des freien abgeschrägten Endes des Hohlzylinders angepasst und dient als Befestigungsfläche für den Rotationsspiegel.

In einer Variante hierzu ist ein flächiges Federblechelement vorgesehen, das in seiner Geometrie der ellipsoiden Öffnung des freien abgeschrägten Endes des Hohlzylinders angepasst ist, wobei die Fläche zur Befestigung des Rotationsspiegels dient. Vorteilhaft sind wieder einzelne, radial nach aussen abstehende Verbindungselemente, vorgesehen für die Herstellung der festen Verbindung mit der Zylinderwand, denkbar wäre aber auch ein durchgehender Verbindungsrand. Letzteres gilt natürlich auch für das oben beschriebene ringförmig ausgestaltete Federblech.

Federblechzungen, ringförmiges Federblech und flächiges Federblechelement sind vorzugsweise aus Federstahl gefertigt.

Sind Rotationsspiegel und Federelement(e) mittels Klebverbindung miteinander verbunden, werden auch Spannungen und Scherkräfte dieser Klebeverbindung von dem oder den Federelementen aufgenommen, was die Gefahr eines Versagens der Klebeverbindung und eines Ablösens des Rotationsspiegels vermindert.

Sehr vorteilhaft ist es, wenn die Klebeverbindung zwischen Rotationsspiegel und Federelement(en) analog ausgebildet ist, wie dies weiter oben für die direkte Verbindung zwischen Rotationsspiegel und Zylinderwand beschrieben ist, also beispielsweise mittels Klebstoff unterschiedlicher Härte bzw. Elastizität und/oder mit unterschiedlichen Klebespaltdicken und/oder mit einer entsprechenden Verteilung von Klebestellen auf die beiden Hälften etc..

Das oder die Federelemente sind im Bereich des freien Endes des Hohlzylinders in oder an der Zylinderwand befestigt, wobei das oder die Federelemente vorzugsweise über den Umfang der Zylinderwand verteilt, insbesondere regelmässig verteilt, in oder an der Zylinderwand befestigt sind.

Die Fixierung in der Zylinderwand kann dabei mittels Klemmverbindung (beispielsweise Klemmschlitz in der Zylinderwand, zugänglich vom Hohlraum des Hohlzylinders her) oder wiederum mittels Klebeverbindung hergestellt sein. Dabei gilt für die Klebeverbindung mit Vorteil das, was bereits für die Klebeverbindung zwischen Federelement und Rotationsspiegel angemerkt wurde.

In einer Weiterbildung dieser Ausführungsform ist der Rotationsspiegel mittels des oder der Federelemente mit seinem peripheren Bereich gegen einen Teil der Zylinderwand gezogen, der dann als Auflagefläche für den Rotationsspiegel dient. Dieser Teil kann die abgeschrägte Stirnwand der Zylinderwand sein oder eine von der Öffnung leicht zurückversetzte in den Hohlraum vorragende Schulter, wie sie ebenfalls weiter oben bereits beschrieben wurde. Die Schulter kann durchgehend oder in einzelnen Segmenten ausgestaltet sein. Um eine entsprechende Zugkraft gegen den Innenraum des hohlzylindrischen Rotationskörpers zu erzeugen stehen die Federelemente oder zumindest Teile von ihnen unter entsprechender Vorspannung, wenn alle Teile montiert sind.

Gegenstand der Erfindung ist auch ein Vermessungsgerät mit einer erfindungsgemässen Rotationseinheit nach einer der vorgenannten Ausführungsformen mit den dort beschriebenen Eigenschaften und Ausführungsdetails.

Das Vermessungsgerät ist dabei insbesondere ein Vermessungsgerät zum optischen Vermessen einer Umgebung durch scannendes Aussenden eines Sendemessstrahls mit einer Strahlungsquelle zur Erzeugung eines Sendemessstrahls und einem Detektor zur Erfassung von einem an einem Objekt in der Umgebung reflektierten Sendemessstrahl als Empfangsmessstrahl. Der in die Umgebung ausgesandte Sendemessstrahl und der aus der Umgebung eingefangene Empfangsmessstrahl haben dabei wenigstens teilweise einen gemeinsamen optischen Pfad. Das Vermessungsgerät hat weiter ein auf einer Basis um eine Basisachse drehbar gelagertes Gehäuse und eine im gemeinsamen optischen Pfad gelegene und im Gehäuse drehbar um eine Rotationsachse gelagerte Rotationseinheit zur einstellbaren, gerichteten Aussendung des Sendemessstrahls in die Umgebung und zum Einfangen des Empfangsmessstrahls aus der Umgebung.

In einer besonderen Ausführungsform ist der Zylinderboden des als Hohlzylinder ausgebildeten Rotationskörpers mit einer Welle, des Vermessungsgerätes verbunden, welche von einem in einem Motorengehäuse angeordneten Motor angetrieben ist. Zwischen dem Motorengehäuse und dem Zylinderboden ist ein Spalt vorhanden, in welchem ein Winkelencoder vorgesehen ist, wobei ein Teil des Winkelencoders mit dem Motorengehäuse und ein anderer Teil des Winkelencoders mit dem Zylinderboden fest verbunden ist.

Die erfindungsgemässe Vorrichtung und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Gleiche Elemente in den Figuren sind mit gleichen Bezugszeichen versehen. Im Einzelnen zeigen:
- Fig. 1: eine schematische Darstellung eines als Laserscanner ausgebildeten erfindungsgemässen Vermessungsgeräts zum optischen Abtasten der Umgebung, montiert auf einem Stativ;
- Fig. 2: schematisch eine erste Ausführungsform eines erfindungsgemässen Vermessungsgeräts im Detail;
- Fig. 3a: schematisch im Schnitt entlang seiner Zylinderachse eine detaillierte Ansicht einer ersten Ausführungsform einer zum erfindungsgemässen Vermessungsgerät gehörenden erfindungsgemässen Rotationseinheit mit Rotationskörper und Rotationsspiegel;
- Fig. 3b: schematisch die Rotationseinheit aus Fig. 3a im Blick auf die Stirnseite eines freien Endes des Rotationskörpers ohne den Rotationsspiegel;
- Fig. 4a: in analoger Darstellung zu Figur 3a eine zweite Ausführungsform einer erfindungsgemässen Rotationseinheit des erfindungsgemässen Vermessungsgeräts;
- Fig. 4b: in analoger Darstellung zu Figur 3b die Rotationseinheit aus Fig. 4a;
- Fig. 4c: schematisch die Rotationseinheit aus Fig. 4a im Blick auf den Zylinderboden
- Fig. 5a: in analoger Darstellung zu Figur 3a eine weitere Ausführungsform einer erfindungsgemässen Rotationseinheit des Vermessungsgeräts;
- Fig. 5b: in analoger Darstellung zu Figur 3b die Rotationseinheit aus Fig. 5a;
- Fig. 6a, 6b: in analoger Darstellung zu Figur 3b zwei weitere Ausführungsformen der erfindungsgemässen Rotationseinheit des erfindungsgemässen Vermessungsgeräts.
- Fig. 7: in analoger Darstellung zu Figur 3a eine weitere Ausführungsform einer erfindungsgemässen Rotationseinheit;
- Fig. 8: ebenfalls in analoger Darstellung zu Figur 3a noch eine weitere Ausführungsform einer erfindungsgemässen Rotationseinheit;
- Fig. 9a, 9b: in analoger Darstellung zu den Figuren 3a und 3b eine weitere Ausführungsform einer erfindungsgemässen Rotationseinheit;
- Fig. 10a, 10b: ebenfalls in analoger Darstellung zu den Figuren 3a und 3b noch eine weitere Ausführungsform einer erfindungsgemässen Rotationseinheit; und
- Fig. 11a, 11b: ebenfalls in analoger Darstellung zu den Figuren 3a und 3b noch eine weitere Ausführungsform einer erfindungsgemässen Rotationseinheit.

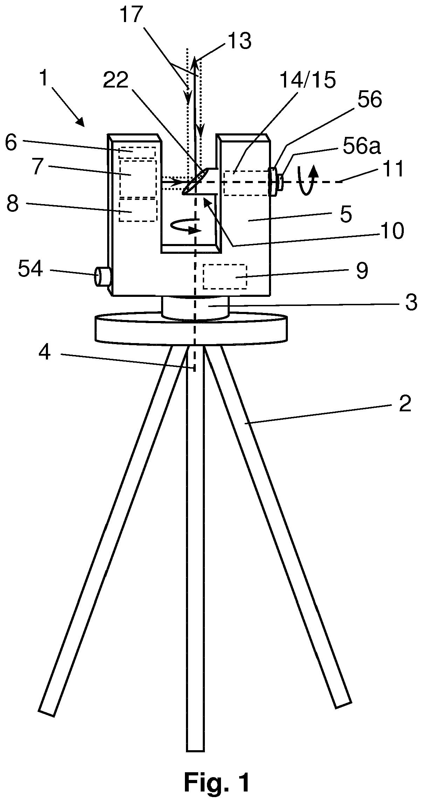

Fig. 1 zeigt eine schematische Darstellung eines als Laserscanner ausgebildeten erfindungsgemässen Vermessungsgeräts 1 zum optischen Abtasten der Umgebung des Vermessungsgeräts 1. Das Vermessungsgerät 1 weist einen Messkopf mit einem Gehäuse 5 auf, das auf einer Basis 3 drehbar um eine Basisachse 4 gelagert ist. Die Basis 3 ihrerseits ist auf einem Ständer 2 montiert, der hier als Stativ ausgebildet ist.

Das Vermessungsgerät 1 weist eine zylindrische Rotationseinheit 10 mit einem Rotationsspiegel 22 auf, die zur Rotation um ihre Zylinderachse 11 von einem in einem Motorgehäuse 14 angeordneten Motor 15 angetrieben ist, wie in Fig. 1 durch gestrichelte Linien angedeutet. Wie ebenfalls in Fig. 1 durch gestrichelte Linien schematisch angedeutet, ist in einem der Rotationseinheit 10 gegenüberliegenden Teil des Gehäuses 5 eine Lichtquelle 6 zur Erzeugung eines Sendelichtstrahls 13 angeordnet, die insbesondere als Laserlichtquelle 6 ausgebildet ist und, die einen modulierten, insbesondere gepulsten Laserstrahl aussenden kann. Weiter sind in diesem Gehäuseteil ein photoempfindlicher Detektor 8 für Empfang und Detektion von Empfangslichtstrahlen 17, die aus der optisch abzutastenden Umgebung reflektiert werden, sowie optische Komponenten 7 für die Umlenkung und Umformung der Sende- und Empfangslichtstrahlen 13, 17 vorgesehen. Das Empfangssignal wird dann beispielsweise durch eine Distanz- und/oder Amplitudenmesseinheit ausgewertet. Ausserdem ist eine Steuereinheit 9 für das Vermessungsgerät 1 im Gehäuse 5 vorgesehen, ebenfalls durch gestrichelte Linien angedeutet, welche bei einem Scanvorgang die Rotation der Rotationseinheit 10 um die Zylinderachse 11 und die Drehung des Gehäuses 5 um die Basisachse 4 koordiniert.

Im Betriebszustand des Vermessungsgeräts 1 wird ein von der Lichtquelle 6 erzeugter, in der Regel gepulster Sendelichtstrahlstrahl 13 durch die optischen Komponenten 7 kollimiert und auf den Rotationsspiegel 22 gelenkt, dort umgelenkt und in die Umgebung ausgesandt. Von einem Objekt in der Umgebung reflektierte oder sonst gestreute Empfangslichtstrahlstrahlen 17 werden vom Rotationsspiegel 22 wieder eingefangen, umgelenkt und durch die optischen Komponenten gebündelt und auf den photosensitiven Detektor 8 weitergeleitet. Die Richtung des Sendelichtstrahls 13 in die Umgebung und der Einfallswinkel für Empfangslichtstrahlen 17 auf den Rotationsspiegel ergeben sich aus den Winkelstellungen der Rotationseinheit 10 bezüglich der Zylinderachse 11 und der Basisachse 4, welche von den Stellungen ihrer jeweiligen Drehantriebe abhängen. Diese Stellungen werden von zugeordneten Encodern erfasst (nicht dargestellt).

Mittels der (schnellen) Drehung des Rotationsspiegels 22 um die Zylinderachse 11, beispielsweise mit einer Rotationsgeschwindigkeit zwischen 50Hz und 250Hz, wird entlang einer Kreislinie in einer vertikalen Ebene die Umgebung optisch abgetastet. Mittels einer (im Vergleich dazu langsamen) Drehung um die Basisachse 4 wird mit den Kreislinien sukzessive der gesamte Raum abgetastet. Aus der Gesamtheit der Messpunkte einer solchen Messung ergibt sich ein Voll-Scan des die Vorrichtung umgebenden Raums. Je nach Art der Auswertung kann aus dem Scan, z.B. eine 3D-Punktwolke oder bei gleichzeitiger Detektion der empfangenen Lichtintensitäten z.B. eine photographieähnliche Darstellung der gescannten Umgebung resultieren.

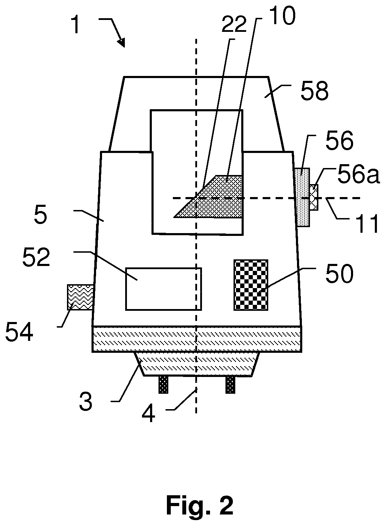

Fig. 2 zeigt beispielhaft eine mögliche Ausführungsform des erfindungsgemässen Vermessungsgeräts 1 im Detail.

Das Vermessungsgerät 1 weist wiederum Gehäuse 5 und eine Basis 3 auf, welche eine Basisachse 4 definiert. Das Gehäuse 5 mit den darin befindlichen Komponenten ist relativ zur Basis 3 um die Basisachse 4 drehbar. Für eine erste Ausrichtung des Messgerätes auf ein Zielobjekt kann die Drehung um die Basisachse 4 manuell geschehen mittels eines Verstelldrehknopfes 54, der auf einen Verstellmechanismus (nicht dargestellt) einwirkt oder mittels einer entsprechenden Motorisierung (nicht dargestellt), die mit dem Verstellmechanismus zusammenwirkt. Optional kann alternativ oder zusätzlich zur Ausrichtung des Gehäuses 5 mittels des Verstelldrehknopfes 54 oder durch Motorantrieb das Gehäuse 5 manuell durch Drehen des ganzen Gehäuses 5 grob ausgerichtet werden.

In analoger Weise kann für die Ausrichtung auf ein Zielobjekt die Rotationseinheit 10 mit dem Rotationsspiegel 22 als Strahlumlenkmittel mittels eines zweiten Verstelldrehknopfes 56 manuell um die Zylinderachse 11 verdreht werden. Der Verstelldrehknopfes 56 wirkt dabei mit einem Grobtrieb zusammen, wobei auch hier zusätzlich Motoren für eine gesteuerte motorisierte Rotation der Rotationseinheit 10 vorgesehen sind. Ferner kann eine hochpräzise manuelle Ausrichtung der Rotationseinheit 10 mittels eines weiteren Feinverstelldrehknopfes 56a oder Steuertasters, welcher mit einem Feinverstellmechanismus verbunden ist, erfolgen. Beim Betätigen des Drehknopfes 56a wird die Rotationseinheit 10 mit einer bestimmten Drehübersetzung mitgedreht. Mittels eines elektronischen Gebers kann das Übersetzungsverhältnis auch adaptiv ausgelegt sein, beispielsweise, indem eine Drehbewegung umso langsamer erfolgt, je grösser die Drehübersetzung wird. Durch die so bereitgestellte Ausrichtbarkeit der Rotationseinheit 10 kann ein Messlaserstrahl sowohl manuell als auch automatisch gesteuert (mittels der mit den jeweiligen Antriebswellen verbundener Motoren) auf ein Ziel ausgerichtet werden.

Des Weiteren weist das Vermessungsgerät 1 beispielhaft einen Griff 58 auf, welcher modular vom Gerät 1 abnehmbar ist. Bei abgenommenem Griff 58 kann z.B. im Rahmen eines Scanvorgangs ein vergrösserter Scanbereich erfasst werden, wobei dann zusätzlich ein Bereich erfassbar ist, welcher zuvor durch den Griff 58 abgeschirmt war.

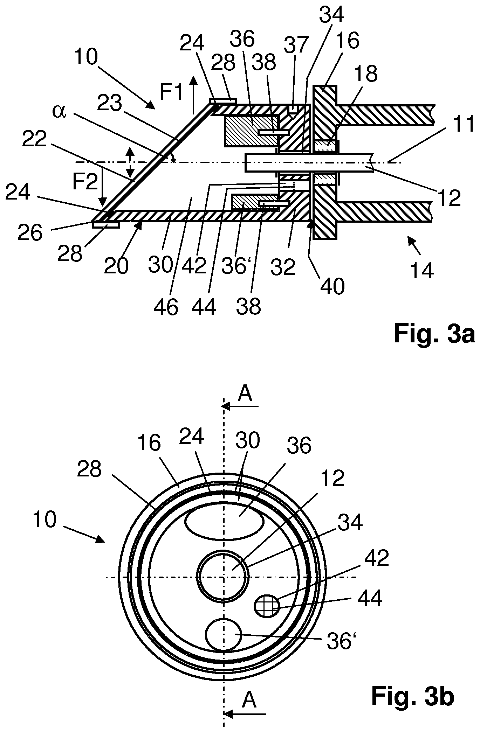

Die Figuren 3a, 3b zeigen eine erste Ausführungsform der Rotationseinheit 10 des erfindungsgemäßen Vermessungsgeräts 1 und angrenzendem Motorengehäuse 14. Figur 3a zeigt eine detaillierte Längsschnittansicht entlang der Zylinderachse 11 und Figur 3b die gleiche Rotationseinheit 10 in Frontalansicht auf den Rotationskörper ohne den Rotationsspiegel.

Die Rotationseinheit 10 mit dem Rotationsspiegel 22 weist einen rohr- bzw. zylinderförmig ausgebildeten Rotationskörper in Form eine Hohlzylinders 20 auf mit einer Zylinderachse 11 und einem Hohlraum 46, der radial durch eine Rohr- bzw. Zylinderwand 30 begrenzt wird und in Achsrichtung durch einen Rohr- bzw. Zylinderboden 32 (in Fig. 3a rechts), sowie im Bereich eines dem Zylinderboden 32 gegenüberliegenden freien Endes der Zylinderwand 30 (in Fig. 3a links) durch den Rotationsspiegel 22. Dieser ist mittels Klebeverbindung 24 mit den Stirnflächen der Zylinderwand 30 fest verbunden. Die Wanddicke des Hohlzylinders ist derart gewählt, dass sie dem Holzylinder an seinem freien Ende eine definierte Steifigkeit verleiht. Die Steifigkeit bzw. Wanddicke ist dabei derart auf die maximale Drehzahl abgestimmt, dass die bei dieser Drehzahl durch Zentrifugalkräfte erzeugten Deformationen am freien Ende in einem Bereich begrenzt bleiben, in dem die spezifizierten Winkel- oder Richtungsgenauigkeiten eingehalten werden können. Die Rohr- bzw. Zylinderwand 30 ist an ihrem freien Ende unter einem Winkel α gegenüber der Zylinderachse 11 in der Art abgeschrägt, dass auch die Stirnflächen der Zylinderwand 30 einen Neigungswinkel α aufweisen, so dass der Rotationsspiegel 22 einfach stirnseitig plan aufgelegt und festgeklebt werden kann. Der Rotationsspiegel ist in seiner Geometrie so gestaltet, dass er - exakt aufgelegt auf die stirnseitige Zylinderwand - bündig mit deren Aussenseite abschliesst. Der Neigungswinkel α von Zylinderwand 30 und Rotationsspiegel 22 beträgt typischerweise 45° bezogen auf die Zylinderachse 11.

Der Rotationsspiegel 22 ist nur stirnseitig an der Zylinderwand 20 befestigt bzw. von ihr getragen; die Rotationseinheit 10 weist keinen zusätzlichen Spiegelträger auf. Vorzugsweise ist der Rotationsspiegel 22 aus Glas gefertigt und weist eine nur geringe Dicke von 0.5 mm bis 5 mm, insbesondere von 1 mm bis 3 mm, auf.

Zur Steigerung der Betriebssicherheit kann eine Bruchsicherung 23 für den Spiegel 22 vorgesehen sein, die in dem hier gezeigten Beispiel eine auf der Rückseite des Rotationsspiegels 22 aufgebrachte Beschichtung oder Sicherheitsfolie 23, umfasst. Hierdurch kann im Fall einer Beschädigung oder eines Zerspringens des Rotationsspiegels 22 während des Betriebs, ein Herumfliegen von Splittern verhindert werden. Dies ist insbesondere bei hoher Drehzahl über 100 Hz sehr vorteilhaft.

Je nach dem, wie der Rotationsspiegel 22 an der Zylinderwand befestigt ist, befindet sich ein für Staub und Feuchtigkeit mehr oder weniger durchlässiger Spalt 26 zwischen dem Rotationsspiegel 22 und der ihn tragenden Zylinderwand 30. Wie in den Fig. 3a, 3b dargestellt, ist dieser Spalt 26 vorteilhaft mit einer Spaltabdichtung 28 abgedichtet. Dadurch kann ein Eindringen von Staub und/oder Schmutz und/oder Feuchtigkeit verhindert werden. Die Spaltabdichtung 28 ist vorzugsweise aussen aufgebracht und umfasst entlang des Umfangs den Rand der Zylinderwand 30 und den peripheren Rand des Spiegels 22. Sie kann beispielsweise ein abdichtendes Klebeband und/oder einen Lack und/oder ein randumschliessendes Bauteil umfassen.

Die Rotationseinheit 10 ist bezüglich ihrer Zylinderachse 11 koaxial drehfest mit einer Welle 12 verbunden. Hierfür ist der Zylinderboden 32 des Hohlzylinders 20 der Rotationseinheit 10 beispielsweise mittels eines Presssitzes 34 oder einer Klebung auf der Welle fixiert. Es sind aber auch andere bekannte, lösbare Verbindungen mit der Welle denkbar, wie z.B. Schraubverbindungen, welche z.B. bei einem Defekt ein leichteres Austauschen der Rotationseinheit erlauben würden, aber dafür bezüglich Spiel möglicherweise schlechtere Betriebseigenschaften aufweisen. Die Welle 12 ist von einem Motor (in Figur 3a, nicht dargestellt) angetrieben, der in einem Motorengehäuse 14 gelagert ist. In einem der Rotationseinheit 10 zugewandten Motorengehäuseteil 16 des Motorgehäuses 14 ist ein Wellenlager 18 vorgesehen, in dem die Welle 12 drehbar gelagert ist.

Um die Winkelstellung der Rotationseinheit 10 und damit des Rotationsspiegels 22 bestimmen zu können, sind auf dem Zylinderboden bzw. dem Gehäuseteil 16 des Motorengehäuses 14 in bekannter Weise Komponenten eines Winkelencoders angeordnet (nicht dargestellt).

Typischerweise ist zwischen dem Zylinderboden 32 und dem Motorgehäuse 14 ein Spalt 40 vorhanden, für den keine Spaltabdeckung vorgesehen ist, um eine reibungsfreie Rotation der Rotationseinheit 10 gegenüber dem Motorgehäuse 14 zu ermöglichen. Im Zylinderboden 32 des Hohlzylinders 20 ist eine Durchlassöffnung 42 vorgesehen, welche mit einer luftdurchlässigen Membran 44 versehen ist, um einen Luftaustausch zwischen dem Hohlraum 46 und dem Spalt 40 zu ermöglichen. Die Durchlassöffnung 42 ermöglicht einen Ausgleich wenn es zu Druckunterschieden zwischen Hohlraum 46 und Umgebung kommt, was beispielsweise eintreten kann aufgrund hoher Rotationsgeschwindigkeiten oder bei Transport des Geräts von niedrig gelegenen Orten in hohe Lagen, zum Beispiel in den Bergen, oder einfach aufgrund von Luftdruckschwankungen. Die Luftströmung wird durch die Membran 44 nicht behindert, während ein Übertritt von Schmutz oder Feuchtigkeit verhindert oder zumindest vermindert wird.

Gemäss der in Fig. 3a gezeigten Ausführungsform ist die Rotationseinheit 10 mit mindestens einem Auswuchtelement 36 versehen, das im Hohlraum 46 untergebracht ist, und zwar vorzugsweise im Bereich des Zylinderbodens 32. Denkbar ist natürlich auch eine Anbringung von Auswuchtelementen ausserhalb des Hohlzylinders, z.B. aussen an der Zylinderwand oder aussen am Zylinderboden (nicht dargestellt). Hierfür können im Zylinderboden Freistellungen für die Aufnahme von Auswuchtelementen vorgesehen sein. Vorzugsweise umfasst ein Auswuchtelement 36 ein Material, das ein höheres spezifisches Gewicht aufweist als dasjenige des Rotationskörpers 20, und zwar insbesondere Messing. In dem in Fig. 3a gezeigten Beispiel sind zwei Auswuchtelemente 36 unterschiedlicher Grösse und Geometrie jeweils über ein Verbindungselement 38, beispielsweise ausgebildet zur Erfüllung einer Aufsteck-Funktionalität, mit dem Zylinderboden 32 verbunden. Genauso könnten diese aber natürlich an der Zylinderwand vorzugsweise in der Nähe des Zylinderbodens befestigt sein.

Wie aus Fig. 3a ersichtlich sind die Auswuchtelemente 36 bei dieser Rotationseinheit vor der Montage des Rotationsspiegels 22 vom freien Ende des Hohlzylinders 20 aus in den Hohlzylinder 20 eingebracht und montiert worden. Gemäß einer anderen hier nicht dargestellten Ausführungsform sind im Zylinderboden mehrere durchgehende Öffnungen vorgesehen, über welche die Montage von Auswuchtelementen 36 im Hohlraum 46 des Hohlzylinders 20 erfolgen kann. Diese Durchgangsöffnungen sind vorzugsweise mit einer Membran verschliessbar und wieder öffenbar, wobei die Membran luftdurchlässig ist, aber Schmutz, Staub und Feuchtigkeit aus dem Hohlraum 46 fernhält. Dadurch dass die Öffnungen öffenbar mit den Membranen verschlossen sind, bleibt eine Nachjustierung möglich.

Zusätzlich oder alternativ zu den Auswuchtelementen 36 können Senklöcher 37 im Zylinderboden 32 die dynamische Auswuchtung unterstützen. Diese Senklöcher 37 können auch nachträglich, das heißt nach der Montage für eine nachträgliche Feinauswuchtung eingebracht werden. Durch die Senklöcher wird Material entfernt, um eine festgestellte Unwucht auszugleichen. Die Position des Senkloches und die Menge des zu entfernenden Materials werden basierend auf der gemessenen Unwucht vor dem Materialabtrag genau bestimmt.

Bis auf die Auswuchtelemente 36 ist der Innenraum zwischen Rotationsspiegel 22, Zylinderwand 30 und Zylinderboden 32 des Rotationskörpers 20 leer, wodurch das Gewicht der Rotationseinheit sehr gering ist. Das zur Achse orthogonale Flächenmoment ist jedoch gross, was trotz der geringen Masse eine hohe Steifigkeit bewirkt.

Vorzugsweise, wie auch im Beispiel von Fig. 3a, 3b dargestellt, ist der Rotationsspiegel 22 am freien Ende der Zylinderwand 30 durch eine Klebeverbindung 24 befestigt. Es sind aber auch andere Befestigungsmöglichkeiten, beispielsweise mit einzelnen über den Umfang verteilten Befestigungsklemmen oder einem rahmenartigen Befestigungsring denkbar, der stirnseitig entlang des Umfangs Rotationsspiegel 22 und Zylinderwand 30 umgreift. In dem hier gezeigten Beispiel ist die Klebeverbindung 24 durchgehend entlang des Umfanges ausgestaltet.

Fig. 3b zeigt eine frontale Sicht auf den Rotationskörper der Rotationseinheit aus Fig. 3a ohne Rotationsspiegel, also senkrecht zur Zylinderachse 11.

Im Zentrum befindet sich die Welle 12, montiert in dem zugeordneten Presssitz 34. Konzentrisch darum herum sind, von innen nach aussen aufeinanderfolgend, die Stirnseite der Zylinderwand 30 mit dem Bereich der Klebeverbindung 24 in seiner Mitte, die Spaltabdichtung 28 und schliesslich das Motorgehäuse 16 sichtbar. Gemäss diesem Beispiel ist die Klebeverbindung 24 durchgehend entlang des gesamten Umfangs der Zylinderwand 30 ausgebildet. Aufgrund dieser Durchgehenden Klebeverbindung, wäre es je nach verwendetem Klebstoff möglich, die Spaltabdichtung 28 wegzulassen, wenn der Klebstoff bereits eine gegen Feuchtigkeit und Schmutz genügend sichere Abdichtung gewährleistet.

Durch gestrichelte Linien angedeutet ist eine geometrische Aufteilung des geometrischen Querschnitts der Zylinderwand 30 in vier Quadranten. Angrenzend an die Zylinderwand 30 ist in der oberen Querschnittshälfte, symmetrisch aufgeteilt auf die beiden oberen Quadranten, ein erstes, rein beispielhaft im Querschnitt elliptisch geformtes erstes Auswuchtelement 36 angeordnet. Dem gegenüber liegend ist, ebenfalls angrenzend an die Zylinderwand 30 in der unteren Querschnittshälfte, symmetrisch aufgeteilt auf die beiden unteren Quadranten, ein zweites Auswuchtelement 36' angeordnet, das beispielhaft im kreisförmigen Querschnitt aufweist und kleiner als das erste Auswuchtelement 36 ausgebildet ist. Wie oben beschrieben gibt es in diesem Beispiel zusätzlich zu den Auswuchtelementen 36, 36' Senklöcher 37, die vorzugsweise in den beiden oberen Quadranten angebracht sind (in Fig 3b nicht erkennbar). Im rechten unteren Quadranten ist ausserdem (am rückwärtigen Ende der Rotationseinheit 10) die Durchlassöffnung 42 mit der darin befindlichen Membran 44 dargestellt.

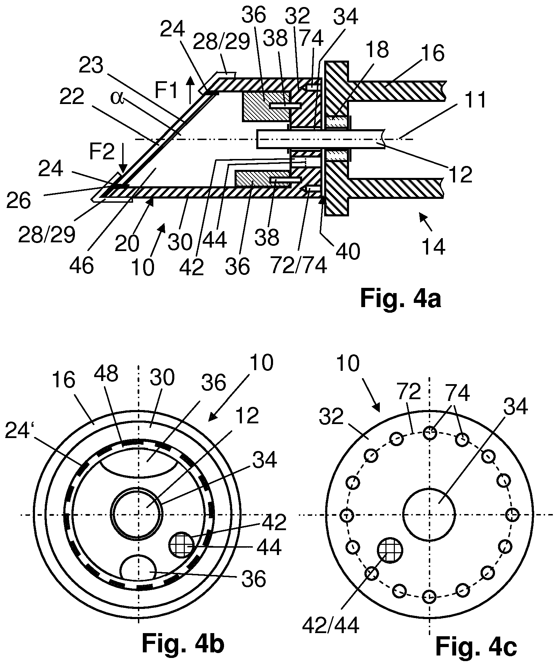

Fig. 4a und 4b zeigen in analoger Darstellungsweise zu den Figuren 3a, 3b Schnittansicht und Frontansicht einer zweiten Ausführungsform einer Rotationseinheit 10 des erfindungsgemässen Vermessungsgeräts. Die hier gezeigte Ausführungsform unterscheidet sich von der in den Fig. 3a, 3b gezeigten dadurch, dass der Rotationsspiegel 22 bei dieser Ausführungsform am freien Ende des Hohlzylinders 20 radial innen an der Zylinderwand 30 befestigt ist. Die hierfür gewählte Klebeverbindung besteht aus diskreten Klebestellen 24' die gleichmässig über den Umfang verteilt angeordnet sind und in diesem Beispiel als lamellenartige, sich in Umfangsrichtung erstreckende Klebestreifen 24' ausgeführt sind, zwischen denen ein gewisser Abstand besteht. Dies ist vorteilhaft für einen Spannungsausgleich im Spiegel 22.

Ausserdem weist die Rotationseinheit 10, abweichend von der Ausführungsform gemäss Fig. 3a, 3b eine zusätzliche Sicherheitsvorkehrung in Form eines übergreifenden Bauelementes 29 auf, um ein Abfliegen des Rotationsspiegels 22 bei dessen Rotation zu verhindern. Das entlang des Umfangs in diesem Ausführungsbeispiel einen Randbereich der Aussenseite sowie die Stirnseite der Zylinderwand 30 und einen peripheren Bereich des Rotationsspiegels 22 umgreifende Bauelement 29 dient hier zugleich als Spaltabdichtung 28.

Durch die Abschrägung am freien Ende ist die Zylinderwand 30 mit einer ersten, in den Fig. 3a, 4a, 3b, 4b oberen Hälfte versehen, in der die Zylinderwand 30 vom Zylinderboden 32 aus betrachtet eine kürzere Länge aufweist, und einer zweiten, in den Fig. 3a, 4a, 3b, 4b unteren Hälfte, in der die Zylinderwand 30 eine grössere Länge aufweist, wobei die Länge der Zylinderwand 30 von einem kürzesten zu einem längsten Punkt den Umfang entlang mit einer konstanten Steigung zunimmt.

Aufgrund der abgeschrägten Form der Zylinderwand 30 mit dem unter einem Winkel α, von vorzugsweise 45°, zur Zylinderachse 11 montierten Rotationsspiegel 22 ergeben sich im Betrieb des Vermessungsgeräts 1 unterschiedliche, in entgegengesetzte Richtung wirkende Kräfte F1, F2 (vgl. Fig. 3a, 4a) die auf den Rotationsspiegel 22 einwirken, wobei die Stärke dieser Kräfte mit der Drehzahl der Rotationseinheit 20 zunimmt.

Bei der Rotation um die Zylinderachse 11, insbesondere bei hohen Rotationsgeschwindigkeiten, wirken auf den Rotationsspiegel Zentrifugalkräfte F1, F2 ein, die radial nach aussen gereichtet sind und im Bereich der kürzeren, in Fig. 4a oberen Hälfte des Hohlzylinders 20 den Rotationsspiegel 22 tendenziell vom freien Ende des Rotationskörpers 20 weg treiben (F1), bzw. den Rotationsspiegel 22 vom freien Ende der Zylinderwand 30 ablösen. Im Bereich der gegenüberliegenden längeren, in Fig. 4a unteren, Hälfte wirkt die Zentrifugalkraft F2 mit einer entgegengesetzten Tendenz, nämlich den Rotationsspiegel 22 gegen das freie Ende der Zylinderwand 30 anzudrücken.

Aufgrund dieser gegensätzlichen Wirkung der auf den Rotationsspiegel 22 einwirkenden, radial nach aussen gerichteten Zentrifugalkräfte F1, F2 ist es vorteilhaft, für die Klebeverbindung 24 des Rotationsspiegels 22 am freien Ende der Zylinderwand 30 mehrere, verschiedene Klebeverbindungen bzw. Klebstoffe mit unterschiedlichen Eigenschaften zu verwenden. Insbesondere wirkt im Bereich der kürzeren (oberen) Hälfte die Verwendung einer ersten, härteren Klebeverbindung bzw. eines ersten härteren Klebstoffs zur Verklebung des Rotationsspiegels 22 am freien Ende der Zylinderwand 30 vorteilhaft einer Ablösung des Rotationsspiegels 30 entgegen. Die Verwendung einer zweiten elastischeren Klebeverbindung bzw. eines zweiten, elastischeren Klebstoffs im Bereich der zweiten, längeren (unteren) Hälfte, wirkt ausgleichend und abfedernd bezüglich der auf dieser Seite einwirkenden und hier den Rotationsspiegel 22 gegen das freie Ende der Zylinderwand 30 pressenden Kräfte F2. Insgesamt können durch diese Massnahme die Spannungen im Spiegel 22 reduziert und die Gefahr der Ablösung des Spiegels 22 erheblich verringert werden. Anzumerken ist hier, dass die Härte bzw. Elastizität einer Klebeverbindung nicht allein durch die Wahl des Klebstoffs beeinflusst werden kann, sondern beispielsweise. auch durch die Klebespaltdicke und die geometrische Ausgestaltung bzw. Größe/flächenmässige Ausdehnung der Klebestellen.

Die Verwendung von in diesem Beispiel zwei Klebstoffen mit unterschiedlicher Elastizität wirken sich auch positiv in Bezug auf den störenden Einfluss von Temperaturschwankungen der Umgebungstemperatur aus. Wegen den unterschiedlichen Ausdehnungskoeffizienten zwischen Rotationsspiegel, der vorzugsweise aus Glas gefertigt ist, und Zylinderwand 30 aus leichtem Metall oder Kunststoff, entstehen bei Extremtemperaturen Verspannungen, was die Ebenheit des Spiegels nachteilig beeinflusst. Diese Spannungen können durch Klebstoffe unterschiedlicher Härte aufgenommen werden, so dass der Spiegel weniger oder keine Spannungen mehr aufweist.

Zur Steigerung der Betriebssicherheit kann neben der Verwendung unterschiedlicher Klebstoffe zusätzlich oder alternativ ein Sicherungselement 29 vorgesehen sein. Das Sicherungselement 29 hält den Spiegel 22 bei einer Ablösung von der Zylinderwand 30 im Bereich der Rotationseinheit 10 zurück. Zusätzlich oder alternativ dazu kann eine Bruchsicherung vorgesehen sein, z.B. in Form einer auf der Rückseite des Rotationsspiegels 22 aufgebrachten Beschichtung 23 oder Sicherheitsfolie oder in Form der Verwendung von Sicherheitsglas.

Obgleich der Rotationskörper 20 grundsätzlich aufgrund der erfinderischen Ausgestaltung bereits ohne Wuchtkreis statisch und dynamisch ausgewuchtet ist, können Toleranzfehler zu kleinen Unwuchten führen, die sich langfristig negativ auswirken können. Solche Unwuchten können sehr einfach behoben werden, wenn ein Auswuchtkreis 72 vorgesehen ist. Ein solcher Auswuchtkreis 72 ist in im Zylinderboden 32 des in den Figuren 4a bis 4c dargestellten Beispiels vorgesehen und umfasst einzelne Gewindebohrungen 74, die konzentrisch und gleichmässig um die Zylinderachse 11 verteilt sind. Für eine Feinauswuchtung können in die Gewindebohrungen Madenschrauben (nicht dargestellt) unterschiedlicher Masse, insbesondere unterschiedlicher Länge und/oder mit unterschiedlichem spezifischen Gewicht eingeschraubt werden. Diese Massnahme ermöglicht nicht nur das Auswuchten während der Montage sondern auch ein nachträgliches Auswuchten.

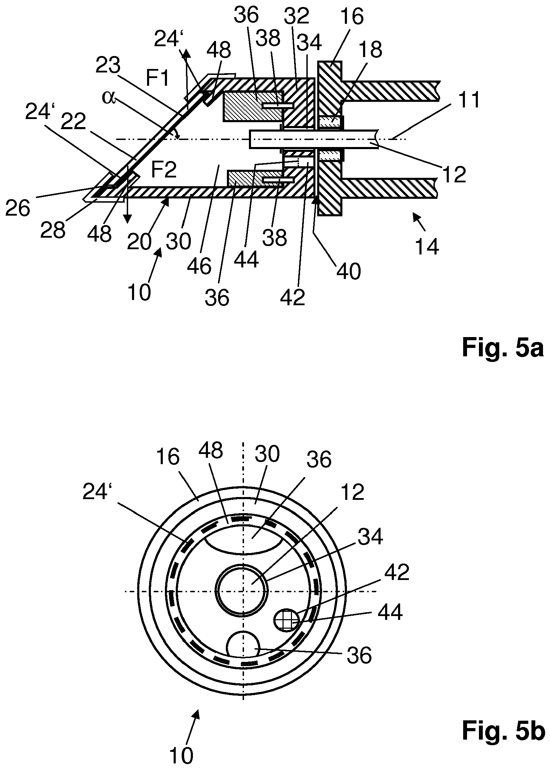

Fig. 5a und 5b zeigen in analoger Darstellungsweise zu den Figuren 3a, 3b Schnittansicht und Frontalansicht einer weiteren gegenüber der Ausführungsform aus den Figuren 4a, 4b leicht abgewandelte Ausführungsform einer Rotationseinheit 10 des erfindungsgemässen Vermessungsgeräts. Als Bruchsicherungselement 23 ist in diesem Beispiel ein Edelstahlblech mit einer thermischen Ausdehnung von etwa 10ppm/K vorgesehen, die auf der Rückseite des Spiegels 22 angebracht ist. Vorzugsweise ist der Spiegel mit dem Stahlblech verklebt und bildet mit ihm so eine feste Einheit. Wiederum ist der Rotationsspiegel 22 in das freie Ende des Hohlzylinders 20 eingesetzt statt auf die Stirnflächen der Zylinderwand 30 aufgesetzt zu sein (Ausführungsform aus Fig. 3a, 3b). Gegenüber der Ausführungsform gemäss Fig. 4a, 4b weist diese Ausführungsform aber noch zusätzliche Schulterelemente 48 auf, die von der Zylinderwand 30 im Bereich des freien Endes, unter dem gleichen Neigungswinkel α, den die Abschrägung der Zylinderwand 30 aufweist, radial nach innen abstehen. Dabei sind die Schulterelemente 48 axial nach innen in den Hohlraum 46 versetzt und zwar vorzugsweise um eine Distanz, die etwa der Dicke des Rotationsspiegels 22 mit seiner Bruchsicherung 23 entspricht, so dass dieser nach der Montage bündig mit der Zylinderwand abschliesst. Wird der Spiegel 22 wiederum radial innen an der Zylinderwand 30 befestigt, kann der Rotationsspiegel 22 in seinen peripheren Bereichen entlang seines Umfangs gegen die Schulterelemente 48 während der Montage abgestützt werden. Dadurch wird die Ausrichtung des Rotationsspiegels 22 bei seiner Montage erleichtert. In dem hier gezeigten Beispiel ist der Rotationsspiegel wiederum durch eine Klebeverbindung 24 mit der Zylinderwand 30 verbunden, wobei allerdings diskrete, lamellenartige Klebestellen 24' der Klebeverbindung dieses Mal auf den Schulterelementen 48 der Zylinderwand 30 angeordnet sind, so dass die Schulterelemente 48 nicht nur der erleichterten Montage dienen, sondern eine tragende und vor allem Kraftaufnehmende Funktion übernehmen, insbesondere bezüglich der im Bereich der längeren Zylinderwand 30 während der Rotation axial auf die Zylinderwand 30 wirkenden Kraft F2. Wiederum ist eine Spaltabdichtung 28 vorgesehen.

In dem hier gezeigten Beispiel ist das Schulterelement 48 als durchgehendes sich radial innen an der Zylinderwand 30 entlang des Umfangs der Zylinderwand 30 erstreckendes Element ausgebildet. Denkbar ist aber auch, es in Form einer Vielzahl von diskreten Schulterelementen 48, welche vorzugsweise in gleichmässigen Abständen zueinander entlang des Umfangs der Zylinderwand 30 verteilt sind, auszubilden. Im hier gezeigten Beispiel sind Zylinderwand 30 inklusive Schulterelement 48 und Zylinderboden 32 einstückig z.B. aus Aluminiumguss gefertigt.

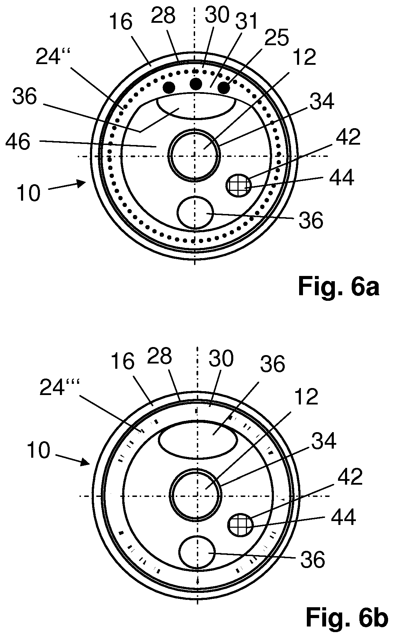

Fig. 6a zeigt in analoger Darstellung zu Fig. 3b, eine weitere Ausführungsform der Rotationseinheit 10 des erfindungsgemässen Vermessungsgeräts. Diese unterscheidet sich von der Ausführungsform gemäss Fig. 3a, 3b dadurch, dass nicht eine durchgehende Klebeverbindung 24 stirnseitig auf der Zylinderwand 30 ausgebildet ist, sondern eine Vielzahl diskreter Klebestellen 24" entlang des Umfangs der Zylinderwand 30 in gleichmässigen Abständen zueinander angeordnet sind. Gemäss dieses Beispiels sind die diskreten Klebestellen 24" punktförmig bzw. kreisförmig ausgebildet und gleichmässig, voneinander beabstandet entlang des Umfangs verteilt. Zudem weist die Zylinderwand 30 an ihrem freien Ende in ihrer kürzeren (hier oberen) Hälfte, in ihrem kürzesten Bereich einen Flansch 31 auf, der sich seitlich symmetrisch von der Mitte in beide Richtungen erstreckt und ein wenig radial nach innen von der Zylinderwand 30 in den Hohlraum 46 hinein. Dieser Flansch dient dazu ein oder mehrere - in diesem Beispiel drei - weitere Klebestellen 25 aufzunehmen, um den Spiegel 22 noch besser vor einem Abheben oder einer Deformation aufgrund der von der Zylinderwand 30 weg wirkenden Zentrifugalkraft F1 zu schützen.

Fig. 6b zeigt in gleicher Darstellung eine weitere Ausführungsform der Rotationseinheit 10 des erfindungsgemässen Vermessungsgeräts. Im Gegensatz zu der Anordnung diskreter Klebestellen gemäss Fig. 6a sind die diskreten Klebestellen 24"' in Form von quadratischen Klebepads 24"' ausgebildet. Ausserdem sind sie nicht in gleichmässigen gegenseitigen Abständen entlang des Umfangs der Zylinderwand 30 angeordnet, sondern in gleichmässig auf die vier Quadranten verteilten Gruppen von Klebestellen 24"' angeordnet, wobei dabei die Abstände zwischen den Gruppen und zwischen den Klebestellen 24"' innerhalb der einzelnen Gruppen gleichmässig sind. Somit sind die Klebepads 24"', bezogen auf das Querschnittszentrum, eine punktsymmetrisch einander gegenüberliegend angeordnet.

Eine solche Anordnung ebenso wie die oben beschriebenen Klebeverbindungen mit anders ausgestalteten diskreten Klebestellen 24', 24" eignen sich hervorragend für die Verwendung verschiedener Klebstoffe mit unterschiedlichen Eigenschaften, so wie dies beispielhaft für das Ausführungsbeispiel 4a, 4b beschrieben ist, also mit einem ersten härteren Klebstoff im Bereich der ersten jeweils oben dargestellten Hälfte mit der kürzeren Zylinderwand, und jeweils einem zweiten, elastischeren Klebstoff in der zweiten, jeweils unten dargestellten Hälfte mit der längeren Zylinderwand. Falls erforderlich können innerhalb der Hälften auch weitere Klebstoffe mit entsprechend angepassten Klebstoffeigenschaften für eine Feinabstimmung auf die auftretenden Kraftverhältnisse eingesetzt werden. Die Kraftverhältnisse können dabei durch Finit-Element-Methode vorherberechnet werden. Auch die flächige Ausdehnung, die Abstände zwischen den Klebestellen und deren generelle Anordnung sowie ihre Dicke können sehr detailliert angepasst und über die Finit-Element-Methode optimiert werden.

Je nach dem, wie der Rotationsspiegel 22 an der Zylinderwand befestigt ist, befindet sich ein für Staub und Feuchtigkeit mehr oder weniger durchlässiger Spalt 26 zwischen dem Rotationsspiegel 22 und der ihn tragenden Zylinderwand 30. Wie in den Fig. 3a, 3b dargestellt, ist dieser Spalt 26 vorteilhaft mit einer Spaltabdichtung 28 abgedichtet. Dadurch kann ein Eindringen von Staub und/oder Schmutz und/oder Feuchtigkeit verhindert werden. Die Spaltabdichtung 28 ist vorzugsweise aussen aufgebracht und umfasst entlang des Umfangs den Rand der Zylinderwand 30 und den peripheren Rand des Spiegels 22. Sie kann beispielsweise ein abdichtendes Klebeband und/oder einen Lack und/oder ein randumschliessendes Bauteil umfassen.

Ist der Rotationsspiegel aus einer verspiegelten Metallplatte gefertigt können auch dessen Geometrie und härte optimiert werden in Bezug auf das Zusammenwirken mit den Klebestellen. Auch hier kann die Finit-Element-Methode vorteilhaft eingesetzt werden.

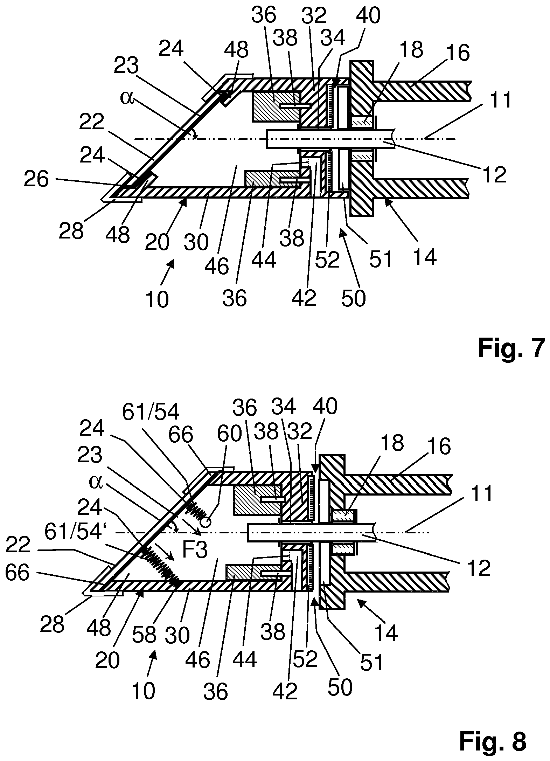

Das Ausführungsbeispiel der Fig. 7 entspricht im Wesentlichen dem Ausführungsbeispiel aus Fig. 5a, nur dass im Spalt 40 zwischen dem Motorengehäuse und der Rotationseinheit 10 ein Winkelencoder 50 angeordnet ist. Sensoren 51 des Winkelencoders 50 sind auf jener der Rotationseinheit 10 zugewandten Seite des Motorengehäuses 14 angeordnet, während eine Encoderscheibe 52 mit Codierung auf der dem Motorengehäuse 14 zugewandten Seite des Zylinderbodens 32 angeordnet ist, so dass sie mit der Rotationseinheit 10 mit rotiert. Bei dem hier gezeigten Winkelencoder 50 handelt es sich um einen optischen Winkelencoder. Denkbar ist aber auch der Einsatz eines kapazitiven oder magnetischen Winkelencoders. Vorteilhaft an dieser Ausgestaltung ist, dass bei einer Achsdeformation bzw. Biegung der Welle, beispielsweise aufgrund einer Unwucht, der Winkelencoder einen radialen und/oder axialen Versatz feststellen kann, was bei der Auswertung der erhaltenen Messergebnisse berücksichtigt werden kann und so zu genaueren Ergebnissen führt, oder bei einem zu grossen Versatz zu einer Warnmeldung führen kann. Außerdem werden bei dieser Ausgestaltung Zylinderboden 32 und Motorengehäuse 14 einfach und effizient als Montageplattform für die Bauelemente, Sensoren 51 und Encoderscheibe 52, des Winkelencoders 50 genutzt, so dass Montagezeit und Platzbedarf reduziert werden.

Wie in Fig. 8 dargestellt, können die Sensoren 51 und die Encoderscheibe 52 des Winkelencoders 50 auch in dafür vorgesehene Aussparungen im Zylinderboden 32 und der dem Zylinderboden 32 zugewandten Seite des Motorengehäuses eingepasst sein, was den benötigten Bauraum weiter reduziert.

Wie in den Figuren 7 und 8 zu erkennen, erlaubt die Platzierung des Winkelencoders 50 im Spalt 40 zwischen Motorengehäuse 14 und Rotationseinheit 10 und insbesondere die Anordnung der Encoderscheibe 52 oder der Sensoren 51 im oder am Zylinderboden 32 der Rotationseinheit nicht eine gerade vom Hohlraum 46 in den Spalt 40 durchgehende Durchlassöffnung 42 für den Druckausgleich. Es versteht sich, dass auch eine Durchlassöffnung 42 im Zylinderboden 32 oder auch in der Zylinderwand 30 vorgesehen sein kann, die den Hohlraum 46 des Hohlzylinders 20 statt mit dem Spalt 40 mit einer anderen luftzugänglichen Aussenseite des Hohlzylinders 20 verbindet, wie dies in den Fig. 7 und 8 dargestellt ist. Auch diese Durchlassöffnung 42 ist vorteilhaft mit einer luftdurchlässigen Membran 44 versehen, die für Feuchtigkeit, Staub und Schmutz undurchlässig ist.

Die in Fig. 8 dargestellte Ausführungsform der Rotationseinheit 10 entspricht abgesehen vom Winkelencoder 50 im Wesentlichen derjenigen aus den Figuren 3a, 3b. Allerdings ist in diesem Ausführungsbeispiel der Rotationsspiegel 22 mittels Federelementen 53 mit der Zylinderwand 30 verbunden. Die Federelemente 53 sind in diesem Beispiel als Spiralfedern 54, 54' ausgebildet, die durch eine Klebeverbindung 24 mit dem Rotationsspiegel 22 verbunden sind. Während die in der Figur 8 unten dargestellte Spiralfeder 54' beispielhaft mittels Klemmverbindung 58 in der Zylinderwand 30 verankert ist, ist die in der Figur 8 oben dargestellte Spiralfeder 54 beispielhaft mittels eines in der Zylinderwand 30 verankerten Haltestifts 60 fest mit der Zylinderwand 30 verbunden. Die Spiralfedern 54, 54' ziehen den Rotationsspiegel 22 mit einer Zugkraft F3 gegen den Innenraum 46 des als Hohlzylinder ausgestalteten Rotationskörpers 20 und somit gegen den abgeschrägten stirnseitigen Rand der Zylinderwand 30, der somit als Auflagefläche 66 für den Spiegel 22 dient.

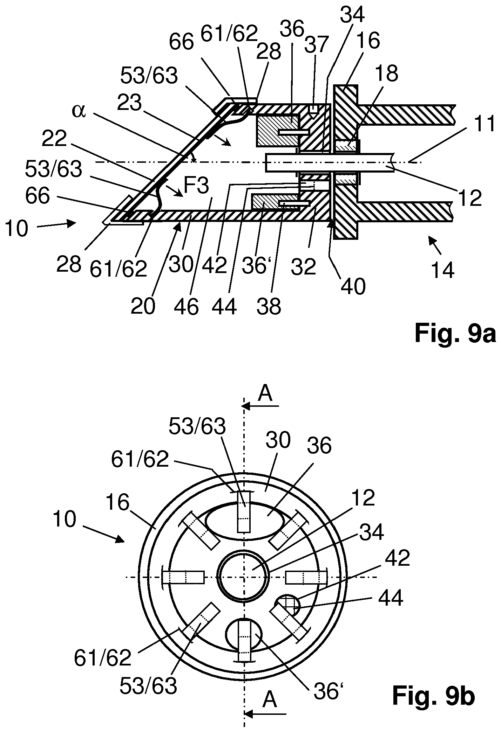

In den Figuren 9a, 9b ist eine erfindungsgemäße Rotationseinheit 10 dargestellt, wie sie ebenfalls im Wesentlichen bereits aus den Figuren 3a und 3b bekannt ist. Aber auch in dieser Ausführungsform ist die Klebeverbindung 24 ersetzt durch mehrere Federelemente 53. Die Federelemente 53 sind in diesem Beispiel als Federblechzungen 63 ausgebildet, die sich von der Zylinderwand 30 her in den Hohlraum 46 des Zylinders 20 und gegen den Rotationsspiegel 22 hin erstrecken. Die Federblechzungen 63 sind mittels Klemmmechanismus 61 in der Zylinderwand 30 verankert. Der Klemmmechanismus 61 umfasst insbesondere vom Hohlraum 46 des Zylinders 20 her zugängliche Befestigungsschlitze 62, in welche die Federblechzungen 63 einklemmbar sind. Die Federblechzungen 63 sind derart gebogen, dass sie in montiertem Zustand unter Vorspannung stehen und den an ihren freien Enden festgeklebten Rotationsspiegel 22 mit einer Zugkraft F3 gegen die abgeschrägte Stirnseite der Zylinderwand 30 als Auflagefläche 66 ziehen. Statt der Klebeverbindung zwischen den Federblechzungen 63 und dem Rotationsspiegel 22 ist auch eine Klemmverbindung vorstellbar. Für die Klemmverbindung kann der Rotationsspiegel beispielsweise mit entsprechenden Klemm- oder Schnappelementen versehen sein, in welche die Federblechzungen einklemmbar/einschnappbar sind (nicht dargestellt). Alle weiteren Elemente dieses Ausführungsbeispiels sind aus einer der vorherigen Figuren bekannt, mit den gleichen Bezugszeichen wie dort benannt und dort beschrieben.

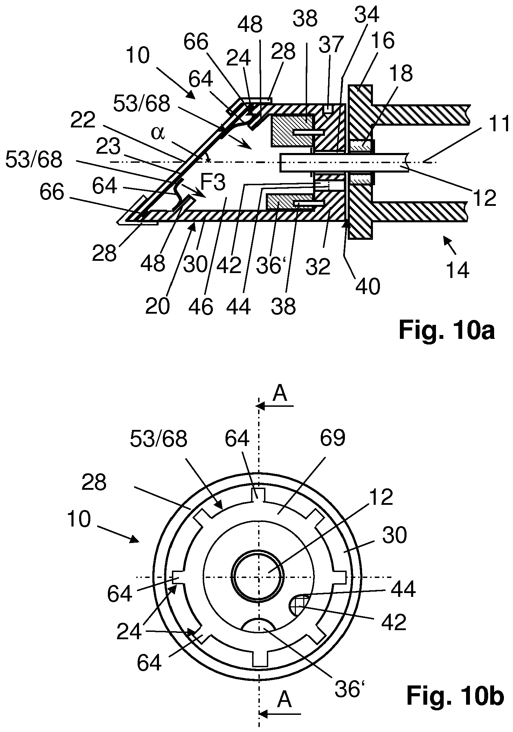

In den Figuren 10a und 10b ist eine Variante der Ausführungsform aus den Figuren 9a, 9b gezeigt. Im Unterschied zu der Ausführungsform der Figuren 9a, 9b ist hier nur ein Federelement 53 vorgesehen. Dieses eine Federelement 53 ist in Form eines ringförmigen Federblechs 68 mit Ring 69 und radial nach aussen von dem Ring 69 abstehenden Verbindungselementen 64 ausgestaltet. Der Ring 69 ist in seiner Geometrie an die ellipsoide Öffnung des abgeschrägten Endes des hohlzylindrisch ausgebildeten Rotationskörpers 20 angepasst und dient der festen Verbindung mit dem Rotationsspiegel 22. Diese feste Verbindung kann mittels Klemmverbindung oder vorzugsweise mittels Klebeverbindung hergestellt sein. Für eine Klemmverbindung kann der Rotationsspiegel beispielsweise mit entsprechenden Klemm- oder Schnappelementen versehen sein in welche der Ring einklemmbar/einschnappbar ist (nicht dargestellt) oder umgekehrt der Rotationsspiegel ist einklemmbar/einschnappbar in entsprechende Klemm- oder Schnappelemente des Federelements 53 (nicht dargestellt). In dem hier gezeigten Beispiel sind die Verbindungselemente 64 auf eine Schulter 48 der Zylinderwand 30, wie sie für die Figur 5a bereits beschrieben wurde, aufgeklebt. Das Federelement 53 ist wiederum in montiertem Zustand so vorgespannt, dass es den Rotationsspiegel 22 gegen die Stirnseite der Zylinderwand 30 zieht, die dann als Auflagefläche 66 dient.

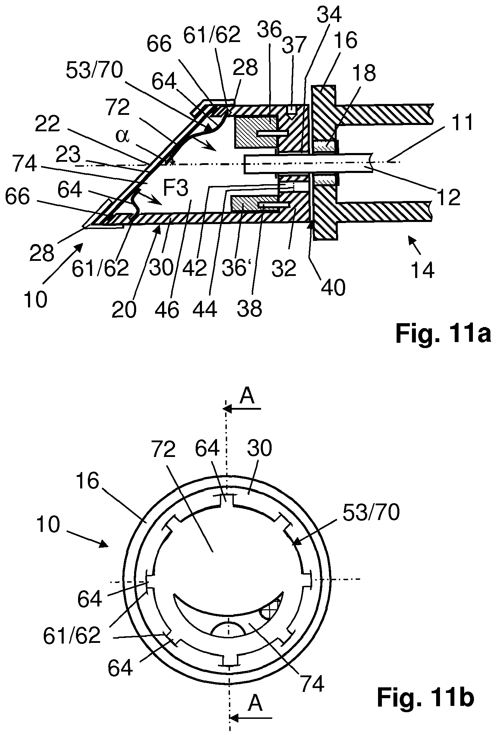

In den Figuren 11a, 11b ist noch eine weitere Variante der erfindungsgemäßen Rotationseinheit 10 dargestellt, die im Wesentlichen auf der Ausführungsform, wie sie in Figuren 9a, 9b dargestellt ist basiert. Anders als dort gibt es in dem hier gezeigten Beispiel aber wieder nur ein einziges, in einem Stück gefertigtes Federelement 53, das als flächiges Federblechelement 70 ausgebildet ist. Das flächige Federblechelement 70 verfügt über eine Fläche 72, die in ihrer Geometrie an die ellipsoide Öffnung des abgeschrägten Endes des hohlzylindrisch ausgebildeten Rotationskörpers 20 angepasst ist. Sie dient der festen Verbindung mit dem Rotationsspiegel 22 mittels Klebeverbindung oder Klemmverbindung, wobei für die Klemmverbindung auf der Fläche 72 und am Rotationsspiegel 22 entsprechend ineinandergreifende Klemmelemente vorgesehen sind (nicht dargestellt). Je nach Bedarf kann die Fläche 72 mit einer oder mehreren Ausnehmungen 74 versehen sein, um Unwucht zu vermeiden und Gewicht einzusparen. Von der Fläche 72 stehen radial nach aussen Verbindungselemente 64 ab, wie sie bereits im Zusammenhang mit dem ringförmigen Federblech 68 aus Figur 10a, 10b beschrieben wurden. Statt mit einem Teil der Zylinderwand 30 verklebt zu sein, sind die Verbindungselemente 64 in diesem Beispiel aber wieder in Befestigungsschlitzen 62 der Zylinderwand in einer Art Klemmmechanismus 61 verankert. Auch dieses Federelement 53 ist in montiertem Zustand so vorgespannt, dass es den Rotationsspiegel 22 mit seinem peripheren Bereich gegen die Stirnseite der Zylinderwand 30 zieht, die dann als Auflagefläche 66 dient.

Denkbar sind auch Konstruktionen in denen der Rotationsspiegel 22 mit seinem peripheren Bereich gegen eine Schulter 48, wie sie oben beschrieben ist, gezogen wird, so dass die Schulter 48 der Zylinderwand 30 als Auflagefläche 66 dient (nicht dargestellt).

Wie aus den Figuren 9b, 10b, 11b ersichtlich sind die Federelemente 53, unabhängig von ihrer jeweiligen Ausgestaltung als Spiralfeder 54, 54', als Federblechzungen 63, als ringförmiges Federblech 68 oder als flächiges Federblechelement 70 vorzugsweise über ihren Umfang bzw. den Umfang der Zylinderwand 30 verteilt und insbesondere über den jeweiligen Umfang regelmässig verteilt, in oder an der Zylinderwand 30 befestigt.

Es versteht sich, dass obgleich hier nur hohlzylindrisch ausgebildete Rotationskörper 22 mit Federelementen 53 dargestellt sind auch Rotationskörper 22, die in Form von Leichtbaustrukturen oder in Massivbauweise gefertigt sind, mit solchen Federelementen 53 versehen sein können, wie sie oben beispielhaft beschrieben sind. Die Federelemente 53 sind dann entweder durch Klebe- oder Klemmverbindungen mit der abgeschrägten Stirnfläche des Rotationskörpers 22 bzw. mit Teilen davon (Leichtbaustruktur) oder aber an der Aussenseite der Zylinderwand 30 im Endbereich befestigt.

Die Auflagefläche 66 zur Abstützung des Rotationsspiegels 22, wie sie beispielsweise in den Ausführungsformen der Figuren 7 bis 11a dargestellt ist, ist optional mit einem oder mehreren Dämpfungselementen versehen (nicht dargestellt), die beispielsweise aus Filz oder Moosgummi oder ähnlichem Material sind, und bei einer Stoss- oder Schlagbelastungen des Vermessungsgeräts den Rotationsspiegel 22 schützen. Ebenfalls optional kann der Rotationsspiegel 22 jeweils auch an der Auflagefläche 66 verklebt sein, so dass der Rotationsspiegel 22 sowohl mittels einer Klebeverbindung, wie sie beispielhaft oben für die Figuren 3a bis 6b beschrieben wurde, und mittels eines oder mehrerer Federelemente 53, wie sie für die Figuren 7 bis 11b beschrieben wurden, mit der Zylinderwand fest verbunden ist.

Zusammenfassend ist nochmals zu betonen, dass sich das erfindungsgemässe Vermessungsgerät insbesondere durch kompakte Bauweise und ein ideales Verhältnis zwischen Steifigkeit und Gewicht seiner Rotationseinheit auszeichnet. Die beschriebenen und in den Figuren dargestellten Details lassen sich noch in weiteren, hier aus Platzgründen nicht im Einzelnen erläuterten Varianten miteinander kombinieren, wobei dem Fachmann klar ist, welche Kombinationen sinnvoll sind.

## Patentansprüche

1. Laserscanner (1) zum optischen Abtasten einer Umgebung durch scannendes Aussenden eines Sendemessstrahls (13), mit
• einer Strahlungsquelle (6) zur Erzeugung eines Sendemessstrahls (13),
• einem Detektor (8) zur Erfassung von einem an einem Objekt in der Umgebung reflektierten Sendemessstrahl (13) als Empfangsmessstrahl (17),
• wobei der in die Umgebung ausgesandte Sendemessstrahl (13) und der aus der Umgebung eingefangene Empfangsmessstrahl (17) wenigstens teilweise einen gemeinsamen optischen Pfad haben,
• einem auf einer Basis (3) um eine Basisachse (4) drehbar gelagerten Gehäuse (5),
• einer im gemeinsamen optischen Pfad gelegenen und im Gehäuse (5) drehbar um eine Rotationsachse (11) gelagerten Rotationseinheit (10) zur einstellbaren, gerichteten Aussendung des Sendemessstrahls (13) in die Umgebung und zum Einfangen des Empfangsmessstrahls (17) aus der Umgebung, wobei die Rotationseinheit (10)
- einen zylinderförmig ausgebildeten Rotationskörper (20) mit einem abgeschrägten, freien Ende aufweist, der im Laserscanner um seine Zylinderachse (11) drehbar gelagert ist, und
- an dessen abgeschrägten, freien Ende ein gegenüber der Zylinderachse (11) geneigt angeordneter Rotationsspiegel (22) zum Umlenken des Sendemessstrahls (13) und des Empfangsmessstrahls (17) vorgesehen ist,
- der Rotationskörper als ein abgeschrägter Hohlzylinder (20) mit einem Hohlraum (46) ausgebildet ist, wobei der Hohlraum (46) begrenzt wird durch einen Zylinderboden (32) und durch eine davon abstehende Zylinderwand (30), die an ihrem freien, dem Zylinderboden (32) gegenüberliegenden Ende abgeschrägt ist, sowie durch den im Bereich des freien Endes an der Zylinderwand (30) befestigten Rotationsspiegel (22),
- wobei der abgeschrägte Hohlzylinder (20) über seinen Zylinderboden (32) bezüglich seiner Zylinderachse (11) koaxial mit einer motorgetriebenen Welle (12) des Laserscanners (1) drehfest verbunden ist;
**dadurch gekennzeichnet, dass**
der Rotationsspiegel (22) durch eine Klebeverbindung (24, 24', 24") im Bereich des freien Endes an der Zylinderwand (30) befestigt ist, wobei der abgeschrägte Hohlzylinder (20) im Bereich seines freien Endes aufgrund seiner Abschrägung im Bereich einer ersten Hälfte eine Zylinderwand (30) kürzere Länge aufweist und im Bereich einer zweiten, der ersten Hälfte gegenüberliegenden Hälfte eine Zylinderwand (30) grössere Länge aufweist, und der Rotationsspiegel (22) im Bereich der ersten kürzeren Hälfte der Zylinderwand (30) mittels einer ersten Klebeverbindung, welche gegenüber einer zweiten Klebeverbindung härter ist, an der Zylinderwand (30) befestigt ist und im Bereich der zweiten längeren Hälfte mittels einer zweiten Klebeverbindung, welche elastischer ist als die erste Klebeverbindung.

2. Laserscanner (1) nach Anspruch 1,
**dadurch gekennzeichnet, dass**
der Rotationsspiegel (22) stirnseitig an der Zylinderwand (30) befestigt ist.

3. Laserscanner (1) nach Anspruch 1,
**dadurch gekennzeichnet, dass**
der Rotationsspiegel (22) radial innen an der Zylinderwand (30) befestigt ist, insbesondere wobei die Zylinderwand (30), benachbart zu dem freien Ende, radial innen mindestens ein Schulterelement (48) aufweist, gegen welches der Rotationsspiegel (22) in einem peripheren Bereich entlang seines Umfangs abstützbar ist.

4. Laserscanner (1) nach einem der vorangehenden Ansprüche,
**dadurch gekennzeichnet, dass**
die Klebeverbindung (24, 24', 24", 24''') in ihrer Härte bzw. Elastizität durch die Geometrie der Klebeverbindung, insbesondere durch die Grösse und geometrische Ausgestaltung der Klebefläche (24',24",24''')
und/oder durch die Dicke des Klebespalts,
und/oder die Wahl unterschiedlicher Klebstoffe mit unterschiedliche Eigenschaften eingestellt ist.

5. Laserscanner (1) nach einem der Ansprüche 1 bis 4, **dad**
**urch gekennzeichnet,** dass
der Rotationsspiegel (22) mit Hilfe eines oder mehrerer Federelemente (53, 63, 54', 54, 68, 70) am Rotationskörper (20) bzw. an der Zylinderwand (30) des Rotationskörpers (20) befestigt ist, wobei insbesondere das oder die Federelemente (53, 63, 54', 54, 68, 70) im Bereich des freien Endes des abgeschrägten Hohlzylinders über den Umfang der Zylinderwand (30) verteilt, insbesondere regelmässig verteilt, in oder an der Zylinderwand (30) befestigt sind.

6. Laserscanner (1) nach Anspruch 5,
**dadurch gekennzeichnet, dass**
der Rotationsspiegel (22) mittels des oder der Federelemente (53, 63, 54', 54, 68, 70) mit seinem peripheren Bereich gegen einen Teil der Zylinderwand (30, 48) gezogen wird, der dann als Auflagefläche (66) für den Rotationsspiegel (22) dient.

7. Laserscanner (1) nach einem der Ansprüche 5 oder 6, **dad**
**urch gekennzeichnet,** dass
das oder die Federelemente (53, 63, 54', 54, 68, 70) zumindest punktuell mit dem Rotationsspiegel (22) durch eine Klebeverbindung verbunden sind und die Klebeverbindung insbesondere gemäß Anspruch 4 ausgebildet ist.

8. Laserscanner (1) nach einem der vorangehenden Ansprüche,
**dadurch gekennzeichnet, dass**
Zylinderboden (32) und Zylinderwand (30) einstückig ausgebildet sind, und zwar insbesondere aus einem leichten Werkstoff, vorzugsweise aus Kunststoff, Aluminium oder einer Aluminiumlegierung.

9. Laserscanner (1) nach einem der vorangehenden Ansprüche,
**dadurch gekennzeichnet, dass**
der Rotationsspiegel (22) aus spiegelnd beschichtetem Glas gefertigt ist und eine Dicke von 0.5 mm bis 3 mm, bevorzugt von 1 mm bis 2 mm, aufweist, und insbesondere mit einer Bruchsicherung versehen ist, die vorzugsweise eine auf der Rückseite des Rotationsspiegels (22) aufgebrachte Beschichtung oder Sicherheitsfolie (23) oder ein Metallblech mit einem thermischen Ausdehnungskoeffizienten ähnlich demjenigen des Rotationsspiegels umfasst.

10. Laserscanner (1) nach einem der vorangehenden Ansprüche,
**dadurch gekennzeichnet, dass**
eine Sicherheitsvorkehrung vorgesehen ist, die den Rotationsspiegel (22) bei Versagen der Befestigung im Bereich des abgeschrägten Hohlzylinders (20) zurückhält, wobei die Sicherheitsvorkehrung vorzugsweise ein Sicherheitselement umfasst, das entlang des Umfangs der Zylinderwand (30) die Zylinderwand (30) radial aussen, den Rotationsspiegel (22) und/oder dessen Bruchsicherung stirnseitig umgreift.

11. Laserscanner (1) nach einem der vorangehenden Ansprüche,
**dadurch gekennzeichnet, dass**
zwischen dem Rotationsspiegel (22) und dem freien Ende der Zylinderwand (30) ein Spalt (26) vorhanden ist und dieser Spalt (26) mit einer Spaltabdichtung (28) versehen ist, wobei die Spaltabdichtung (28) insbesondere ein abdichtendes Klebeband und/oder einen abdichtenden Lack und/oder ein abdichtendes Bauteil umfasst.

12. Laserscanner (1) nach einem der vorangehenden Ansprüche,
**dadurch gekennzeichnet, dass**
die Rotationseinheit (10) mit mindestens einem Auswuchtelement (36) versehen ist, das insbesondere im Hohlraum (46) des abgeschrägten Hohlzylinders (20) und dort vorzugsweise im Bereich des Zylinderbodens (32) angeordnet ist, wobei das Auswuchtelement (36) insbesondere ein Material umfasst, das ein höheres spezifisches Gewicht aufweist, als dasjenige aus dem der abgeschrägte Hohlzylinder gebildet ist, vorzugsweise Messing.

13. Laserscanner (1) nach einem der vorangehenden Ansprüche,
**dadurch gekennzeichnet, dass**
zum Auswuchten ein oder mehr Auswuchtkreise (72) mit Öffnungen oder Gewindebohrungen (74) zur Aufnahme von Masseelementen in Form von Stiften, Madenschrauben und/oder Knetmasse vorgesehen sind.

14. Laserscanner (1) nach einem der vorangehenden Ansprüche,
**dadurch gekennzeichnet, dass**
die Zylinderwand (30) auf ihrer dem freien abgeschrägten Ende gegenüberliegenden Seite den Zylinderboden (32) überragt und in dem so vom Zylinderboden (32) und den überragenden Zylinderwand (30) begrenzten Raum (40) ein Teil (51, 52) eines Winkelencoders (50) vorgesehen und fest mit dem Zylinderboden (32) verbunden ist.

## Claims

1. Laser scanner (1) for optically scanning an environment by scanning emission of an emission measurement beam (13), having
- a radiation source (6) for generating an emission measurement beam (13),
- a detector (8) for registering an emission measurement beam (13) reflected on an object in the environment as a reception measurement beam (17),
- wherein the emission measurement beam (13) emitted into the environment and the reception measurement beam (17) captured from the environment at least partially have a shared optical path,
- a housing (5) mounted rotatably about a base axis (4) on a base (3),
- a rotation unit (10), which is located in the shared optical path and is mounted rotatably about an axis of rotation (11) in the housing (5), for the settable, oriented emission of the emission measurement beam (13) into the environment and for the capture of the reception measurement beam (17) from the environment, wherein the rotation unit
- has a rotation body (20) implemented as a cylinder having a beveled, free end, which is provided to be rotatably mounted in the laser scanner about its cylinder axis (11), and
- having on its beveled, free end, a rotation mirror (22) arranged inclined in relation to the cylinder axis (11) for deflecting the emission measurement beam (13) and the reception measurement beam (17),
- the rotation body is implemented as a hollow cylinder (20) having a cavity (46), wherein the cavity (46) is delimited by a cylinder bottom (32) and a cylinder wall (30) protruding therefrom, which cylinder wall (30) is beveled on its free end opposite to the cylinder bottom (32), and delimited by the rotation mirror (22) fastened in the region of the free end on the cylinder wall (30),
- wherein the hollow cylinder (20) is connectable, coaxially with respect to its cylinder axis (11), in a rotationally-fixed manner to a motor-driven shaft (12) of the surveying device (1) via its cylinder bottom (32),
**characterized in that**
the rotation mirror (22) is fastened by an adhesive bond (24, 24', 24") in the region of the free end on the cylinder wall (30), wherein
the beveled hollow cylinder (20) has a cylinder wall (30) of shorter length in the region of its free end because of its bevel in the region of a first half and has a cylinder wall (30) of greater length in the region of a second half opposite to the first half, and the rotation mirror (22) is fastened to the cylinder wall (30) in the region of the first shorter half of the cylinder wall (30) by means of a first adhesive bond, which is harder than a second adhesive bond, and is fastened to the cylinder wall (30) in the region of the second longer half by means of a second adhesive bond, which is more elastic than the first adhesive bond.

2. Laser scanner (1) according to Claim 1,
**characterized in that** the rotation mirror (22) is fastened on the end side on the cylinder wall (30).

3. Laser scanner (1) according to Claim 1,
**characterized in that** the rotation mirror (22) is fastened on the radial inside on the cylinder wall (30), in particular wherein the cylinder wall (30), adjacent to the free end, has at least one shoulder element (48) on the radial inside, against which the rotation mirror (22) is supportable in a peripheral region along its circumference.

4. Laser scanner (1) according to any one of the preceding claims,
**characterized in that** adhesive bond (24, 24', 24") is set in its hardness or elasticity
- by the geometry of the adhesive bond, in particular by the size and geometric embodiment of the adhesive surface (24', 24", 24'") and/or by the thickness of the adhesive gap, and/or
- the selection of different adhesives having different properties.

5. Laser scanner (1) according to any one of Claims 1 to 4,
**characterized in that** the rotation mirror (22) is fastened with the aid of one or more spring elements (53, 63, 54', 54, 68, 70) on the rotation body (20) or on the cylinder wall (30) of the rotation body (20), respectively, wherein in particular the spring element or spring elements (53, 63, 54', 54, 68, 70) is/are fastened in or on the cylinder wall (30) in the region of the free end of the hollow cylinder distributed over the circumference of the cylinder wall (30), in particular uniformly distributed.

6. Laser scanner (1) according to Claim 5,
**characterized in that** the rotation mirror (22) is drawn by means of the spring element or spring elements (53, 63, 54', 54, 68, 70) with its peripheral region toward a part of the cylinder wall (30, 48), which is then used as the support surface (66) for the rotation mirror (22).

7. Laser scanner (1) according to any one of Claims 5 or 6,
**characterized in that** the spring element or spring elements (53, 63, 54', 54, 68, 70) are connected at least at spots to the rotation mirror (22) by an adhesive bond and the adhesive bond is implemented in particular according to Claim 4.

8. Laser scanner (1) according to any one of the preceding claims,
**characterized in that** cylinder bottom (32) and cylinder wall (30) are implemented in one piece, and specifically in particular made of a light material, preferably plastic, aluminum, or an aluminum alloy.

9. Laser scanner (1) according to any one of the preceding claims,
**characterized in that** the rotation mirror (22) is manufactured from mirror-coated glass and has a thickness of 0.5 mm to 3 mm, preferably of 1 mm to 2 mm, and is provided in particular with a breakage protection, which preferably comprises a coating or safety film (23) applied to the rear side of the rotation mirror (22) or a metal plate having a coefficient of thermal expansion similar to that of the rotation mirror.

10. Laser scanner (1) according to any one of the preceding claims,
**characterized in that** a safety precaution is provided, which holds back the rotation mirror (22) in the region of the hollow cylinder (20) in the event of failure of the fastening, wherein the safety precaution preferably comprises a safety element, which encloses the cylinder wall (30) on the radial outside and the rotation mirror (22), and/or its breakage protection, on the end side along the circumference of the cylinder wall (30).

11. Laser scanner (1) according to any one of the preceding claims,
**characterized in that** a gap (26) is provided between the rotation mirror (22) and the free end of the cylinder wall (30), and this gap (26) is provided with a gap seal (28), wherein the gap seal (28) comprises in particular a sealing adhesive tape and/or a sealing lacquer and/or a sealing component.

12. Laser scanner (1) according to any one of the preceding claims,
**characterized in that** the rotation unit (10) is provided with at least one balance element (36), which is arranged in particular in the cavity (46) of the hollow cylinder (20) and preferably in the region of the cylinder bottom (32) therein, wherein the balance element (36) in particular comprises a material which has a higher specific weight than that from which the hollow cylinder is formed, preferably brass.

13. Laser scanner (1) according to any one of the preceding claims,
**characterized in that** one or more balance circles (72) having openings or threaded boreholes (74) for accommodating mass elements in the form of pins, grub screws, and/or modeling clay are provided for balancing.

14. Laser scanner (1) according to any one of the preceding claims,
**characterized in that** the cylinder wall (30) protrudes beyond the cylinder bottom (32) on its side opposite to the free beveled end and a part (51, 52) of an angle encoder (50) is provided and is fixedly connected to the cylinder bottom (32) in the space (40) thus delimited by the cylinder bottom (32) and the protruding cylinder wall (30).

## Revendications

1. Scanner laser (1) destiné à l'échantillonnage optique d'un environnement par émission en balayage d'un faisceau émis de mesure (13), doté
• d'une source de rayonnement (6) destinée à obtenir un faisceau émis de mesure (13),
• d'un détecteur (8) destiné à saisir le faisceau émis de mesure (13) réfléchi par un objet dans l'environnement en tant que faisceau reçu de mesure (17),
• dans lequel le faisceau émis de mesure (13) envoyé dans l'environnement et le faisceau reçu de mesure (17) capturé depuis l'environnement ont au moins en partie un chemin optique commun,
• d'un boîtier (5) disposé sur une base (3) en pivotement autour d'un axe de base (4),
• d'une unité rotative (10) située sur le chemin optique commun et disposée dans le boîtier (5) en pivotement autour d'un axe de rotation (10), destinée à l'envoi dirigé et réglable du faisceau émis de mesure (13) dans l'environnement et à la capture du faisceau reçu de mesure (17) depuis l'environnement, dans lequel l'unité rotative (10)
- comporte un corps rotatif (20) réalisé de forme cylindrique et doté d'une extrémité libre biseautée, laquelle est disposée dans le scanner laser en pivotement autour de son axe de cylindre (11), et
- à extrémité libre biseautée duquel est prévu un miroir rotatif (22), agencé de manière inclinée par rapport à l'axe de cylindre (11), destiné à dévier le faisceau émis de mesure (13) et le faisceau reçu de mesure (17),
- le corps rotatif est réalisé comme un cylindre creux biseauté (20) avec une cavité (46), dans lequel la cavité (46) est délimitée par un fond de cylindre (32) et par une paroi de cylindre (30) dans le prolongement de ce dernier, laquelle est biseautée à son extrémité libre opposée au fond du cylindre (32), ainsi que par le miroir rotatif (22) fixé à la paroi de cylindre (30) dans la zone de l'extrémité libre,
- dans lequel le cylindre creux biseauté (20) est par le biais de son fond de cylindre (32) relié sans rotation possible à un arbre (12) entraîné par un moteur du scanner laser (1), de manière coaxiale par rapport à son axe de cylindre (11) ;
**caractérisé en ce que**
le miroir rotatif (22) est fixé à la paroi de cylindre (30) par un joint adhésif (24, 24', 24") dans la zone de l'extrémité libre, dans lequel le cylindre creux biseauté (20) présente, en raison de son biseautage, dans la zone de son extrémité libre une longueur plus courte dans la zone d'une première moitié d'une paroi de cylindre (30) et une longueur plus longue dans la zone d'une deuxième moitié d'une paroi de cylindre (30) opposée à la première extrémité, et le miroir rotatif (22) est fixé à la paroi de cylindre (30) dans la zone de la première moitié, plus courte, de la paroi de cylindre (30), au moyen d'un premier joint adhésif, lequel est plus dur qu'un deuxième joint adhésif et dans la zone de la deuxième moitié, plus longue, au moyen d'un deuxième joint adhésif, lequel est plus élastique que le premier joint adhésif.

2. Scanner laser (1) selon la revendication 1,
**caractérisé en ce que** le miroir rotatif (22) est fixé frontalement sur la paroi de cylindre (30).

3. Scanner laser (1) selon la revendication 1,
**caractérisé en ce que** le miroir rotatif (22) est fixé radialement à l'intérieur sur la paroi de cylindre (30), en particulier dans lequel la paroi de cylindre (30) présente radialement à l'intérieur, au voisinage de l'extrémité libre, au moins un élément d'épaulement (48), contre lequel le miroir rotatif (22) peut s'appuyer dans une zone périphérique le long de son pourtour.

4. Scanner laser (1) selon l'une des revendications précédentes,
**caractérisé en ce que** le joint adhésif (24, 24', 24", 24''') est paramétré dans sa dureté ou son élasticité par la géométrie du joint adhésif, en particulier par la taille et la configuration géométrique de la surface adhésive (24', 24", 24''') et/ou par l'épaisseur du joint de collage, et/ou le choix de différentes colles avec différentes propriétés.

5. Scanner laser (1) selon l'une des revendications 1 à 4,
**caractérisé en ce que** le miroir rotatif (22) est fixé à l'aide d'un ou plusieurs éléments de ressort (53, 63, 54', 54, 68, 70) sur le corps rotatif (20) ou à la paroi de cylindre (30) du corps rotatif (20), dans lequel en particulier le ou les éléments de ressort (53, 63, 54', 54, 68, 70) sont fixés dans ou sur la paroi de cylindre (30), dans la zone de l'extrémité libre du cylindre creux biseauté, répartis sur le pourtour de la paroi de cylindre (30), en particulier répartis de manière régulière.

6. Scanner laser (1) selon la revendication 5,
**caractérisé en ce que** le miroir rotatif (22) est, au moyen du ou des éléments de ressort (53, 63, 54', 54, 68, 70), tiré avec sa zone périphérique contre une partie de la paroi de cylindre (30, 48), laquelle sert alors de surface portante (66) pour le miroir rotatif (22).

7. Scanner laser (1) selon l'une des revendications 5 ou 6,
**caractérisé en ce que** le ou les éléments de ressort (53, 63, 54', 54, 68, 70) sont reliés au moins ponctuellement au miroir rotatif (22) par un joint adhésif et le joint adhésif est en particulier réalisé conformément à la revendication 4.

8. Scanner laser (1) selon l'une des revendications précédentes,
**caractérisé en ce que** le fond du cylindre (32) et la paroi du cylindre (30) sont réalisés d'une pièce, et ainsi en particulier réalisés en matériau léger, de préférence en plastique, en aluminium ou en alliage d'aluminium.

9. Scanner laser (1) selon l'une des revendications précédentes,
**caractérisé en ce que** le miroir rotatif (22) est fait de verre avec un revêtement réfléchissant et présente une épaisseur de 0,5 mm à 3 mm, de préférence de 1 mm à 2 mm, et est en particulier prévu avec une sécurité anti-rupture, laquelle comprend de préférence un revêtement ou un film de sécurité (23) déposé sur la face arrière du miroir rotatif (22) ou une tôle métallique avec un coefficient de dilatation thermique similaire à celui du miroir rotatif.

10. Scanner laser (1) selon l'une des revendications précédentes,
**caractérisé en ce qu'**un dispositif de sécurité est prévu, lequel retient le miroir rotatif (22) lors d'une défaillance de la fixation dans la zone du cylindre creux biseauté (20), dans lequel le dispositif de sécurité comprend de préférence un élément de sécurité entourant radialement à l'extérieur la paroi du cylindre (30) le long du pourtour du cylindre (30), entourant frontalement le miroir rotatif (22) et/ou la sécurité anti-rupture de celui-ci.

11. Scanner laser (1) selon l'une des revendications précédentes,
**caractérisé en ce qu'**une fente (26) est présente entre le miroir rotatif (22) et l'extrémité libre de la paroi du cylindre (30) et cette fente (26) est prévue avec un dispositif d'étanchéité (28), dans lequel le dispositif d'étanchéité (28) comprend en particulier une bande adhésive étanche et/ou un vernis étanche et/ou une pièce étanche.

12. Scanner laser (1) selon l'une des revendications précédentes,
**caractérisé en ce que** l'unité rotative (10) est prévue avec au moins un élément d'équilibrage (36), lequel est en particulier agencé dans la cavité (46) du cylindre creux biseauté (20) et de préférence dans la zone du fond du cylindre (32), dans lequel l'élément d'équilibrage (36) comprend en particulier un matériau possédant une masse spécifique plus élevée que celui dont est fait le cylindre creux biseauté, de préférence du laiton.

13. Scanner laser (1) selon l'une des revendications précédentes,
**caractérisé en ce que** sont prévus pour l'équilibrage un ou plusieurs cercles d'équilibrage (72) dotés d'ouvertures ou d'alésages filetés (74) pour recevoir des éléments de masse sous forme de broches, de vis sans tête et/ou de pâtes.

14. Scanner laser (1) selon l'une des revendications précédentes,
**caractérisé en ce que** la paroi de cylindre (30) dépasse sur son côté opposé à l'extrémité biseautée libre le fond du cylindre (32) et **en ce que** dans l'espace (40) ainsi délimité par le fond du cylindre (32) et la paroi de cylindre (30) en saillie une partie (51, 52) d'un codeur angulaire (50) dans l'espace est prévue et raccordée de manière fixe au fond du cylindre (32).
